# EUROPÄISCHE PATENTSCHRIFT

(11) **EP 1 803 177 B1**
(45) Veröffentlichungstag und Bekanntmachung des Hinweises auf die Patenterteilung: **10.01.2018**
(21) Anmeldenummer: 04791272.0
(22) Anmeldetag: 21.10.2004
(51) Int. Cl.: H01M 4/36, H01M 2/14, H01M 2/16, H01M 4/48, H01M 10/02

(54) **ANORGANISCHE SEPARATOR-ELEKTRODEN-EINHEIT FÜR LITHIUM-IONEN-BATTERIEN, VERFAHREN ZU DEREN HERSTELLUNG UND VERWENDUNG IN LITHIUM-BATTERIEN**
INORGANIC SEPARATOR-ELECTRODE-UNIT FOR LITHIUM-ION BATTERIES, METHOD FOR THE PRODUCTION THEREOF AND USE THEREOF IN LITHIUM BATTERIES
UNITE SEPARATEUR-ELECTRODE INORGANIQUE POUR BATTERIES AU LITHIUM-ION, SON PROCEDE DE PRODUCTION, ET SON UTILISATION DANS DES BATTERIES AU LITHIUM

(43) Veröffentlichungstag der Anmeldung: 04.07.2007
(73) Patentinhaber: Evonik Degussa GmbH, 45128 Essen (DE)
(72) Erfinder: HÖRPEL, Gerhard, 48301 Nottuln (DE); HENNIGE, Volker, 48249 Buldern (DE); HYING, Christian, 46414 Rhede (DE); AUGUSTIN, Sven, 64372 Ober-Ramstadt (DE)
(74) Vertreter: Tostmann, Holger Carl
(86) Internationale Anmeldenummer: PCT/EP2004/052605
(87) Internationale Veröffentlichungsnummer: WO 2006/045339

(56) Entgegenhaltungen:
- EP-A- 1 049 188
- WO-A-99/15262
- WO-A-99/62620
- WO-A-03/021697
- WO-A-2004/021475
- WO-A-2004/049471
- PATENT ABSTRACTS OF JAPAN Bd. 012, Nr. 168 (E-611), 20. Mai 1988 (1988-05-20) & JP 62 281263 A (NIPPON SHEET GLASS CO LTD; others: 01), 7. Dezember 1987 (1987-12-07)

## Beschreibung

Die Erfindung betrifft eine Separator-Elektroden-Einheit für Lithium-Ionen-Batterien, ein Verfahren zu deren Herstellung sowie deren Verwendung.

Ein elektrischer Separator ist ein Separator, der in Batterien und anderen Anordnungen, in denen Elektroden, z.B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z.B. im Elektrolyten der Batterie, verwendeten Chemikalien und Lösemittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z.B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z.B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen (z.B. EP 0 892 448, EP 0 967 671) bzw. aus anorganischen Vliesstoffen, wie z.B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z.B. aus Polypropylen oder aus einem Polypropylen/Polyethylen/Polypropylen-Verbund.

Für die Herstellung von Li-Sekundärbatterien werden heute im allgemeinen Elektroden und Separatoren getrennt gefertigt und erst beim Batteriehersteller zusammengefügt. Dies kann z.B. durch Laminieren bei erhöhtem Druck und erhöhter Temperatur erfolgen. Einfacher wäre es, den Separator direkt auf eine der beiden Elektroden aufzubringen. Die positive Elektrode (Kathode) besteht meistens aus einer porösen Lithium aufweisenden Verbindung, wie z.B. LiCoO₂ oder LiMnO₂, das eingebunden bzw. verbunden in bzw. durch eine wärmebeständige Polymermatrix, wie z.B. Polyvinylidenfluorid wird. Die negative Elektrode (Anode) besteht häufig aus Graphit, der ebenfalls mit einem Polymer verklebt ist. Das direkte Aufbringen von dünnen, porösen Schichten oder Filmen auf konventionellen Separatormaterialien, wie PP und PE, ist nur schwer möglich.

Es ist deshalb heute üblich Elektrode und Separator durch laminieren zusammenzufügen. Damit dies gelingt werden Separatoren eingesetzt, die ein relativ wärmebeständiges Polymer aufweisen. In EP 1 049 188 wird der Separator beispielsweise dadurch hergestellt, das ein Lithium-Glas-Keramik-Pulver erzeugt wird, welches in einer Lösung von Polyvinylidenfluorid (PVDF) und Hexafluoropropylen in Aceton suspendiert wird und aus dieser Suspension anschließend ein Film erzeugt wird. Der so hergestellte Separator wird auf die positive Elektrode auflaminiert. Auch der in DE 199 18 856 beschriebene Separator wird einzeln hergestellt und anschließend auf die positive Elektrode auflaminiert. Der in DE 199 18 856 beschriebene Separator wird ebenfalls durch Herstellen eines Films aus einer Suspension, die in diesem Fall eine Lösung eines Stickstoff aufweisenden aromatischen Polymers (als sehr hitzebeständiges Polymer) und Keramikpulver aufweist, erhalten.

Darüber hinaus ist aus dem Stand der Technik ebenfalls bekannt die Direktbeschichtung der negativen Elektrode (Graphit) mit einer porösen Polymerschicht (WO 01/91219, WO 01/89022), die als Füllstoff keramische Partikel, wie z.B. TiO₂, SiO₂ oder Al₂O₃ aufweisen kann. Direktbeschichtungen von Elektroden, also Anode oder Kathode, mit reinen Keramiken sind aus dem Stand der Technik nicht bekannt.

Keramische Separatoren für Li-Ionen-Batterien sind ebenfalls nahezu unbekannt. In WO 99/15262 wird ein Verbundwerkstoff beschrieben, der dadurch hergestellt wird, dass Keramikpartikel auf und in einem porösen Träger gebracht und dort verfestigt werden. Dieser Verbundwerkstoff soll ebenfalls als Separator geeignet sein. Eine direkte Herstellung von Separator-Elektroden-Einheiten wird in der WO 99/15262 nicht beschrieben. Untersuchungen haben außerdem gezeigt, dass mit den dort beschriebenen Materialien und der dort beschriebenen Technik keine Separator-Elektroden-Einheiten herstellbar sind.

DE 102 38 943 beschreibt, dass sich durch Aufbringen einer Suspension von Metalloxid-Partikeln, ausgewählt aus Al₂O₃ und ZrO₂ mit einer Partikelgröße vorzugsweise größer der Porengröße der zu beschichtenden Elektrode in einem Sol und anschließender Verfestigung zu einer porösen, anorganischen Schicht auf der Elektrode diese mit einem dünnen Separator beschichtet werden kann, der nach der Imprägnierung mit einer Elektrolytlösung oder einem Elektrolytgel eine hervorragende Ionenleitfähigkeit aufweist und außerdem die höchst mögliche Sicherheit gegen Durchbrennen (Melt-Down) zeigt. Eine solche Separator-Elektroden-Einheit kann außerdem eine Flexibilität aufweisen, die jener der eingesetzten positiven oder negativen Elektrode entspricht.

Nachteil dieser Technik ist aber weiterhin, dass die Separator-Elektroden-Einheit (SEA) nur unterhalb der Schmelz-, Erweichungs- oder Zersetzungstemperatur des organischen Polymers, dass zur Herstellung der Elektrode verwendet wurde, getrocknet und verfestigt werden kann. Eine höher Temperaturstabilität wäre aber wünschenswert um verschiedene Nachteile zu lösen. So kann durch die geringe Temperaturstabilität nur bei niedrigen Temperaturen getrocknet werden, was entsprechend lange und aufwendige Trocknungsprozeduren zur Herstellung des SEA und der daraus gefertigten Batterie (vor dem Befüllen mit einem Elektrolyten) nach sich zieht.

Die mit einer SEA gemäß dem Stand der Technik gefertigte Batterie enthält polymere Binder, die die Elektrodenmaterialien untereinander und auf der Elektrode binden. Es wurde nun durch den Anmelder gefunden, dass diese Polymere einen Teil der Elektrodenmaterialoberfläche blockieren, so dass kein vollkommen ungehinderter Ionentransport und Ioneneintritt in die Aktivmassen gegeben ist. Manche Bindermaterialien sind zudem bei höheren Temperaturen zersetzbar, so dass es zu unerwünschten teilweise exothermen Zersetzungsreaktionen in der Batteriezelle bei einer Fehlfunktion dieser kommen kann, an der die polymeren Binder beteiligt sind.

Aufgabe der vorliegenden Erfindung war daher die Bereitstellung einer anorganischen Separator-Elektroden-Einheit (i-SEA), welche keinerlei organischen polymeren Binder enthält und die auch bei höheren Temperaturen noch stabil ist.

Überraschenderweise wurde gefunden das es möglich ist Separator-Elektroden-Einheiten (SEA) herzustellen, deren Elektrode keinerlei organische Materialien aufweist, wenn die Aktivmassen der Elektroden, wie z.B. LiCoO₂; LiMnO₂; LiNiO₂; LiFe(PO₄) und andere, nicht mit polymeren Bindern, sondern mit anorganischen Klebern auf der Ableitelektrode fest aufgebracht und elektrisch leitend verbunden werden.

Gegenstand der vorliegenden Erfindung sind deshalb Separator-Elektroden-Einheiten, umfassend eine poröse, als Elektrode in einer Lithium-Batterie geeignete Elektrode und eine auf dieser Elektrode aufgebrachten Separatorschicht, welche dadurch gekennzeichnet sind, dass die Separator-Elektroden-Einheiten eine anorganische Separatorschicht, die zumindest zwei Fraktionen von Metalloxidpartikeln aufweist, die sich in ihrer mittleren Partikelgröße und/oder in dem Metall voneinander unterscheiden, und eine Elektrode aufweisen, deren Aktivmassepartikel durch anorganischen, elektrisch leitfähigen Kleber untereinander und mit der Ableitelektrode verbunden sind.

Ebenfalls ist Gegenstand der vorliegenden Erfindung ein Verfahren zur Herstellung einer erfindungsgemäßen Separator-Elektroden-Einheit, welches dadurch gekennzeichnet ist, dass eine poröse, als positive (Kathode) oder negative (Anode) Elektrode in einer Lithium-Batterie geeigneten Elektrode durch Aufbringen einer Suspension, die Aktivmassepartikel suspendiert in einem Sol oder einer Suspension aus nanoskaligen Aktivmassepartikeln in einem Lösemittel aufweist, und Verfestigen der Suspension zu einer rein anorganischen porösen Elektrodenschicht auf einer Ableitelektrode durch zumindest eine thermische Behandlung, erzeugt wird und dass auf dieser Elektrode als Substrat eine poröse anorganische Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird, sowie Separator-Elektroden-Einheiten, hergestellt gemäß dem erfindungsgemäßen Verfahren.

Außerdem sind Gegenstand der vorliegenden Erfindung die Verwendung einer erfindungsgemäßen Separator-Elektroden-Einheit in Lithium-Batterien sowie Lithium-Batterien, die eine erfindungsgemäße Separator-Elektroden-Einheit aufweisen.

Die erfindungsgemäße anorganische Separator-Elektroden-Einheit hat den Vorteil, dass bei ihr die gesamte Oberfläche der Elektrodenmaterialien zugänglich ist. Die Temperaturstabilität wird lediglich durch die Temperaturstabilität der Aktivmassen bestimmt. Diese ist stark vom Ladezustand der Batterie abhängig. Für Details zu dieser Thematik sei auf die Literatur verwiesen (J.O. Besenhard, "Handbook of Battery Materials" (VCH-Verlag, Weinheim 1999)). Typischerweise ist die erfindungsgemäße i-SEA bei Temperaturen über 200°C bis zu 700 °C, je nach der Stabilität der jeweilig verwendeten Aktivmasse stabil.

Durch die bevorzugt als anorganische Kleber verwendeten Oxide von Kobalt und/oder Mangan und/oder Titan bzw. durch die Verwendung von nanoskaligen Aktivmassepartikel, werden sehr gute elektrisch leitfähige Verbindungen der großen Aktivmassenpartikel geschaffen. In diese Materialien lassen sich zudem auch Lithium-Ionen einlagern, weshalb der Kleber neben der Klebefunktion auch als Aktivmasse wirken kann und somit die Speicherkapazität gegenüber herkömmlichen SEAs verbessert wird, weil kein Inertmaterial, also Material welches keine Lithium-Ionen aufnehmen kann bzw. welches nicht leitend ist, in der Elektrode vorhanden ist. Zudem wird die Oberfläche der Aktivmassenteilchen nicht blockiert, da der Kleber ja selbst Lithiumionen leitend ist und somit das Lithium durch die Verklebung hindurch wandern kann.

Zudem haben die erfindungsgemäßen i-SEAs den Vorteil, dass sie sehr einfach herzustellen sind kann und dass bei der Herstellung deutlich höhere Temperaturen angewendet werden können als bei der Herstellung herkömmlicher Separator-Elektroden-Einheiten, da die Elektrode keinerlei wärmeempfindliche organische Materialien aufweist. Auf Grund des Herstellungsverfahrens ist außerdem gewährleistet, dass der Separator sehr fest an der Elektrode haftet. Als Separatorschicht wird kein poröses Polymer verwendet sondern eine poröse Keramikschicht. Diese Keramikschicht wird über eine Suspension (Schlicker) auf die Elektrode aufgebracht und dort verfestigt. Dadurch ist es möglich sehr dünne Separatorschichten aufzubringen, die nach der Infiltration mit dem Elektrolyten nur einen sehr geringen Widerstand aufweisen. Diese Separator-Elektroden-Einheit eignet sich somit besonders gut für den Einsatz in Hochleistungs- und Hochenergiebatterien. Die erfindungsgemäße Separator-Elektroden-Einheit weist außerdem eine sehr gute mechanische Stabilität auf und kann insbesondere flexibel sein. Durch die Verwendung einer porösen keramischen Separatorschicht ist ein Whiskerwachstum im bzw. durch den Separator quasi unmöglich. Außerdem stellt die Keramikschicht einen sehr guten Schutz vor einem mechanischen Kurzschluss der beiden Elektroden dar, wie es ein freitragender Separator nie sein kann. Durch die anorganische, keramische Separatorschicht ist es außerdem unmöglich, dass es zu einem Durchbrennen (melt down) der Batterie bzw. des Separators kommen kann. Die hier beschriebene Separatorschicht in den Separator-Elektroden-Einheiten sind also viel sicherer als alle Polymerseparatoren aber auch sicherer als ein keramischer Separator auf Basis eines Polymervlieses als Träger.

Die Sicherheit spielt in Lithium-Batterien eine sehr wichtige Rolle. Im Gegensatz zu anderen Batterietypen (Pb, NiCd, NiMeH) wird als Lösemittel für den Elektrolyten nicht Wasser sondern ein brennbares Lösemittel, wie z.B. Ethylencarbonat (EC), Propylencarbonat (PC), Dimethylcarbonat (DMC) verwendet, da sich Wasser bei den hohen Potenzialen in der Li-Zelle zersetzen würde. Aus diesem Grund kann und muss der Separator entscheidend zur Sicherheit einer Hochenergie-Batterie beitragen. Im Falle einer Überhitzung und Zerstörung der Zelle kann es also bei den Lithiumbatterien zu einem Brand oder Explosion kommen.

Bei einer Überhitzung der Zelle kann es insbesondere zur Freisetzung von Sauerstoff aus den positiven Massen, wie z.B. LiCoO, LiMnO oder LiNiO durch Zersetzung kommen. Beim Vorhandensein von organischem Binder und/oder einem organische Separator kann der freigewordene Sauerstoff mit diesen organischen Materialien reagieren und es kann dadurch zum eigentlichen thermischen Runaway kommen. Bei den erfindungsgemäßen i-SEAs wird eine solche Reaktion durch die Vermeidung von zur Reaktion geeigneten organischen Materialien verhindert.

Beim Thema Sicherheit muss grundlegend zwischen zwei Gesichtspunkten unterschieden werden:
1 Erwärmung durch Fehlfunktion der Zelle,
2 Äußere Erwärmung.

Der erstere Fall kann z.B. dann auftreten, wenn es beim Betrieb der Batterie zu einem inneren Kurzschluss kommt. Die Batterie kann sich dann in einer gefährlichen Reaktion sehr schnell selbst entladen. Hierbei treten dann so große elektrische Ströme auf, dass eine geschlossene Batteriezelle im ungünstigsten Fall sogar explodieren kann.

Polymerseparatoren bringen beispielsweise die für Lithium-Batterien zur Zeit geforderte Sicherheit, indem sie ab einer bestimmten Temperatur (der Shut-Down-Temperatur, die bei ca. 120°C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion die zur Explosion führen kann zum erliegen.

Im zweiten Fall wird die Zelle aufgrund äußerer Umstände aber weiter erwärmt, so wird bei ca. 150 °C die melt down -Temperatur überschritten. Ab dieser Temperatur kommt es zum Schmelzen des Separators, der ja üblicherweise aus PP besteht, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion die mit einer Explosion der Zelle endet, bzw. der entstehende Druck wird durch ein Überdruckventil (eine Berstscheibe) häufig unter Feuererscheinungen abgebaut.

Bei der erfindungsgemäßen Separator-Elektroden-Einheit mit einer anorganischen Separatorschicht kann es zum sogenannten Melt-Down nicht kommen, da die hitzebeständigen anorganischen Partikel dafür sorgen, dass der Separator nicht schmelzen wird. Somit ist sichergestellt, dass es keine Betriebszustände gibt, in denen ein großflächiger Kurzschluss entstehen kann. Selbst bei einem äußeren Brand, der die Zelle auf über 200°C aufheizt, erfüllt der keramische Separator weiterhin seine Funktion.

Falls ein Abschaltmechanismus (Shut down-Mechanismus) gewünscht wird, kann dieser auf einfache Weise dadurch erreicht werden, das die Oberfläche der Separatorschicht mit Partikel eines Stoffs beschichtet werden, die beim Erreichen einer bestimmten Temperatur schmelzen und so die Poren der Separatorschicht verschließen und so ein weiterer Ionenfluss verhindert wird. Dies kann beispielweise durch eine zusätzlich aufgebrachte Polymer- oder Wachsschicht erreicht werden, deren Schmelzpunkt im gewünschten Bereich liegt.

Auch bei einem inneren Kurzschluss, der z.B. durch einen Unfall verursacht wurde, ist die erfindungsgemäße Separator-Elektroden-Einheit sehr sicher. Würde sich z.B. ein Nagel durch eine Batterie bohren, geschieht je nach Separator folgendes: Ein Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der erfindungsgemäßen Separatorschicht mit Abschaltmechanismus schmilzt zwar das polymere Material der Abschaltschicht, nicht aber die anorganische Separatorschicht. Somit läuft die Reaktion im Inneren der Batteriezelle nach einem solchen Unfall sehr viel moderater ab. Diese Batterie ist somit deutlich sicherer als eine mit einem Polymerseparator ausgerüstete Batterie, weshalb Batterien mit erfindungsgemäßen Separator-Elektroden-Einheiten insbesondere im mobilen Bereich eingesetzt werden können, wo die Gefahr von Unfällen deutlich größer ist als im stationären oder portablen Bereich.

Durch die einfache Art der Herstellung der erfindungsgemäßen Separator-Elektroden-Einheit besitzt diese außerdem einen deutlichen Preisvorteil gegenüber Einheiten, die auf herkömmliche Weise hergestellt werden, da dabei ein zusätzlicher Verfahrensschritt, nämlich das Verbinden von Separator und Elektrode durchgeführt werden muss.

Durch die bevorzugte Verwendung von in ihrer Partikelgröße genau abgestimmten Metalloxid-Partikeln zur Herstellung der porösen keramischen Separatorschicht wird eine besonders hohe Porosität der fertigen Separatorschicht erreicht, wobei die Porosität immer noch genügend klein ist, um ein Durchwachsen von Lithium-Whiskern durch den Separator zu verhindern. Um hier eine ideale Porengröße bzw. Porosität des Separators zu erreichen hat es sich als besonders vorteilhaft erwiesen, die eingesetzten Metalloxidpartikel vor dem suspendieren durch Windsichten oder Hydroklassieren zu klassieren, um möglichst gleichgroße Metalloxid-Partikel einsetzen zu können, da bei handelsüblichen Metalloxid-Partikeln während Herstellung, Lagerung und/oder Transport häufig ein nicht unbeträchtlicher Anteil an Partikeln vorliegt, die deutlich kleiner (z.B. Bruch oder ähnliches) oder aber auch deutlich größer (z.B. Aggregate, Agglomerate) sind. Das Vorliegen einer großen Anzahl kleinerer Partikel führt aber dazu, dass die Poren der Separatorschicht oder sogar die Poren der Elektrode teilweise durch diese kleinen Partikel verkleinert oder ganz verschlossen werden. Die ideale Porengröße bzw. Porosität des Separators ist dann nicht immer zu erreichen.

Auf Grund der hohen Porosität in Verbindung mit der geringen Dicke der Separatorschicht und der sehr guten Benetzbarkeit der hydrophilen Keramikschicht mit polaren Lösemitteln ist es außerdem möglich den Separator vollständig oder zumindest nahezu vollständig mit dem Elektrolyten zu tränken, so dass keine Toträume in einzelnen Bereichen des Separators und damit in bestimmten Wicklungen der Batteriezellen entstehen können, in denen kein Elektrolyt vorliegt. Dies wird insbesondere dadurch erreicht, dass durch die Einhaltung der Partikelgröße der Metalloxid-Partikel die erhaltenen Separatoren frei bzw. nahezu frei von geschlossenen Poren sind, in welche der Elektrolyt nicht eindringen kann. Auf Grund der geringen Dicke und der hohen Porosität der Separatorschicht ist die Separator-Elektroden-Einheit insbesondere für den Einsatz in Lithium-Hochenergie- bzw. Hochleistungsbatterien geeignet.

Die erfindungsgemäße Separator-Elektroden-Einheit und ein Verfahren zu ihrer Herstellung wird im folgenden beschrieben, ohne dass die Erfindung auf diese Ausführungsarten beschränkt sein soll.

Die erfindungsgemäße Separator-Elektroden-Einheit, umfassend eine poröse, als Elektrode in einer Lithium-Batterie geeignete Elektrode und eine auf dieser Elektrode aufgebrachten Separatorschicht, zeichnet sich dadurch aus, dass die Separator-Elektroden-Einheit eine anorganische (nicht elektrisch leitende, keramische) Separatorschicht, die zumindest zwei Fraktionen von Metalloxidpartikeln aufweist, die sich in ihrer mittleren Partikelgröße und/oder in dem Metall voneinander unterscheiden, und eine Elektrode aufweist, deren Aktivmassepartikel durch anorganischen, elektrisch leitfähigen Klebern untereinander und mit der Ableitelektrode verbunden sind. In einer bevorzugten Ausführungsart der Erfindung weisen die zwei Partikelfraktionen in der Separatorschicht Metalloxidpartikel auf, die sich sowohl im Metall als auch in ihrer Partikelgröße unterscheiden. Die anorganische Separatorschicht kann neben den anorganischen Bestandteilen geringe Mengen an organischen, insbesondere siliziumorganischen Verbindungen aufweisen. Der Anteil dieser organischen Bestandteile an der anorganischen Separatorschicht beträgt aber vorzugsweise weniger als 5 Gew.-%, besonders bevorzugt weniger als 1 Gew.-% und besonders bevorzugt weniger als 0,1 Gew.-%. Diese Silane können als Haftvermittler dienen, um eine bessere Anbindung der Keramik an die Elektroden zu erzielen.

Die zwei Partikelfraktionen in der Separatorschicht weisen, unabhängig davon ob sie als Metalloxid Oxide gleicher oder unterschiedlicher Metalle aufweisen, bevorzugt Partikel auf, deren Partikelgrößen (D_{g}) und (Dₖ) sich um zumindest den Faktor 10 und besonders bevorzugt um zumindest den Faktor 100 unterscheiden. Vorzugsweise weist die erfindungsgemäße Separator-Elektroden-Einheit eine Separatorschicht auf, die Metalloxid-Partikel mit einer mittleren Partikelgröße (D_{g}) größer oder kleiner als die mittlere Porengröße (d) der Poren der porösen positiven Elektrode aufweist, die durch Metalloxid-Partikel, die eine Partikelgröße (Dₖ) kleiner als die Poren der porösen positive Elektrode aufweisen, verklebt sind, wobei die Separatorschicht beim Vorhandensein von Metalloxidpartikeln mit einer mittleren Partikelgröße (D_{g}) kleiner als die mittlere Porengröße (d) der Poren der porösen Elektrode eine Schicht bildet, die bevorzugt weniger als 20, besonders bevorzugt von 1 bis 10 Partikeldurchmesser und besonders bevorzugt von 1 bis 3 Partikeldurchmesser D_{g} weit in die Poren der Elektroden eindringt. Die Dicke (z) der Separatorschicht beträgt vorzugsweise von kleiner 100 D_{g} und größer gleich 1,5 D_{g} und besonders bevorzugt von kleiner 20 D_{g} und größer gleich 5 D_{g} ab der Oberfläche der positiven oder negativen Elektrode.

Die Metalloxid-Partikel mit einer mittleren Partikelgröße (D_{g}) größer oder kleiner als die mittlere Porengröße (d) der Poren der porösen positiven Elektrode sind vorzugsweise Al₂O₃- und/oder ZrO₂-Partikel. Die Metalloxid-Partikel mit einer mittleren Partikelgröße (Dₖ) kleiner als die mittlere Porengröße (d) der Poren der porösen positiven Elektrode sind vorzugsweise SiO₂- und/oder ZrO₂-Partikel.

Besonders bevorzugt weisen die erfindungsgemäßen Separator-Elektroden-Einheiten Separatorschichten mit Metalloxid-Partikel mit einer mittleren Partikelgröße (D_{g}) größer oder kleiner als die mittlere Porengröße (d) der Poren der porösen positiven Elektrode eine mittlere Partikelgröße (D_{g}) von kleiner 10 µm, vorzugsweise von kleiner 5 µm und ganz besonders bevorzugt von kleiner 3 µm auf. Bei einer Dicke der Separatorschicht von 5 D_{g} ergibt sich damit für Partikel mit einer mittleren Partikelgröße von 3 µm eine Dicke der Separatorschicht von etwa max. 15 µm. Bevorzugte Schichtdicken der Separatorschicht weisen Dicken kleiner 25 µm, vorzugsweise von 10 bis 15 µm auf. Wenn notwendig kann die Dicke der Separatorschicht aber auch kleiner 10 µm betragen. Die Auftragsgewichte betragen vorzugsweise von 10 bis 200 g/m², bevorzugt kleiner 100 g/m² und ganz besonders bevorzugt kleiner 50 g/m².

Die Separatorschicht der erfindungsgemäßen Separator-Elektroden-Einheit weist vorzugsweise eine Porosität von 30 bis 70 % (mittels Quecksilber-Porosimetrie bestimmt) auf. Durch die hohe Porosität, die gute Benetzbarkeit und die geringe Dicke der Separatorschicht lässt sich die Separatorschicht gut mit Elektrolyten imprägnieren bzw. befüllen, weshalb die Separatorschicht eine relativ hohe Ionenleitfähigkeit zeigt. Durch die geringe Dicke wird ein besonders geringer elektrischer Widerstand des Separators in der Anwendung mit einem Elektrolyten erzielt. Die Separator-Elektroden-Einheit eignet sich deshalb besonders gut für Hochleistungsbatterien. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann. Die Separator-Elektroden-Einheit eignet sich deshalb auch besonders gut für Hochenergiebatterien.

Die Elektrode in der erfindungsgemäßen Separator-Elektroden-Einheit weist Aktivmassepartikel auf, die eine mittlere Partikelgröße von 100 nm bis 25 µm, vorzugsweise von 200 nm bis 15 µm und besonders bevorzugt von 500 nm bis 10 µm aufweisen.

Handelt es sich bei der SEA um eine Einheit, die als positive Elektrode eingesetzt werden soll, so weist diese positive Elektrode als Aktivmasse vorzugsweise eine Aktivmasse auf, die zumindest eines der Elemente Co, NI, Mn, V, Fe oder P aufweist. Vorzugsweise weisen die positiven Elektroden Aktivmassen auf, die ausgewählt sind aus, LiNi_{1-y}Co_{y}O₂, (mit y = 0 bis 1), LiMn₂O₄, LiMnO₂, LiFePO₄, LiVOPO₄ und/oder LiNiVO₄. Als Ableitelektroden (Stromsammler) weisen Einheiten, die als positive Elektroden eingesetzt werden, bevorzugt solche auf, die Aluminium aufweisen. Die Ableitelektroden sind bevorzugt Folien oder Streckmetalle die dieses Material aufweisen bzw. aus diesem gefertigt sind. Vorzugsweise weist die erfindungsgemäß eingesetzte positive Elektrode eine möglichst hohe Porosität, vorzugsweise im Bereich von 20 bis 50 % (bestimmt mittels Hg-Porosimetrie) auf, um eine möglichst große aktive Oberfläche bereitzustellen. Besonders bevorzugte weist die positive Elektrode eine mittlere Porengröße (d) von 0,1 bis 20 µm, vorzugsweise von 1 bis 10 µm auf.

Die Ableitelektrode kann entweder einseitig oder vorzugsweise beidseitig beschichtet sein. Beidseitig beschichtete positive Elektroden haben vorzugsweise eine Dicke von 20 bis 250 µm und ein Flächengewicht von 50 bis 800 g/m².

Handelt es sich bei der erfindungsgemäßen SEA um eine Einheit, die als negative Elektrode eingesetzt werden soll, so weist diese als Aktivmasse vorzugsweise Aktivmassen auf, die zumindest eines der Elemente C, Si, Nb, Ti. Mo oder W aufweisen. Besonders bevorzugt weisen negative Elektroden Aktivmassen auf, die ausgewählt sind aus Graphit, Silizium, Graphit-Silizium-Mischungen, Lithium-Silizium- oder Lithium-Zinn-enthaltende Legierungen, LiNb₂O₅, LiTiO₂, Li₄Ti₅O₁₂, LiMoO₂ und/oder LiWO₂. Als Ableitelektroden (Stromsammler) weisen Einheiten die als negative Elektroden eingesetzt werden bevorzugt solche auf, die Kupfer oder karbonisiertes Polyacrylnitril aufweisen. Die Ableitelektroden sind bevorzugt Folien oder Streckmetalle die diese Materialien aufweisen bzw. aus diesen gefertigt sind. Vorzugsweise weisen die erfindungsgemäßen Elektroden eine möglichst hohe Porosität, vorzugsweise im Bereich von 20 bis 50 % (bestimmt mittels Hg-Porosimetrie) auf, um eine möglichst große aktive Oberfläche bereitzustellen. Besonders bevorzugte erfindungsgemäße Elektroden weisen mittlere Porengrößen (d) von 0,1 bis 20 µm, vorzugsweise von 1 bis 10 µm auf. Die Ableitelektrode kann einseitig oder vorzugsweise auch beidseitig beschichtet sein. Beidseitig beschichtete negative Elektroden haben vorzugsweise eine Dicke von 20 bis 250 µm und ein Flächengewicht von 50 bis 800 g/m².

Die für die als positive oder negative Elektrode eingesetzten SEAs genannten Werte können aber auch deutlich abweichen, je nach den Anforderungen der Batteriehersteller. Für Hochleistungsbatterien werden üblicherweise Elektroden mit einer möglichst dünnen Elektrodenschicht gewünscht. Für Hochenergiebatterien wird eine möglichst dicke Elektrodenschicht gewünscht, wobei die mögliche Dicke aber durch die mit zunehmender Dicke rapide abnehmende Lade-/Entladegeschwindigkeit eingeschränkt wird. Bevorzugte Elektroden weisen einen Stromsammler mit einer Dicke von 10 bis 50 µm auf. Bevorzugte Elektroden für Hochleitungsbatterien weisen eine Dicke von 5 bis 25 µm je Elektrodenschicht auf. Bevorzugte Elektroden für Hochenergiebatterien weisen eine Dicke von 15 bis 100 µm je Elektrodenschicht auf. Diese Angaben gelten jeweils für positive und negative Elektroden.

Der Kleber, mit welchem die Aktivmassenpartikel untereinander und mit der Ableitelektrode verbunden sind, weist vorzugsweise nanoskalige Partikel mit einer mittlere Primärpartikelgröße von 1 bis 100 nm, vorzugsweise von 5 bis 50 nm auf. Die Bestimmung der Partikelgröße ist relativ schwierig, da die Partikel, mit Ausnahme von eingesetzten nanoskaligen Partikeln, aus Solen entstanden sind. Die anorganischen, elektrisch leitfähigen Kleber sind vorzugsweise nanoskalige Partikel von Aktivmasse der Elektroden, wobei diese für positive Elektroden vorzugsweise zumindest eines der Elemente Co, Ni, Mn, V, Fe oder P und für negative Elektroden vorzugsweise zumindest eines der Elemente C, Si, Nb, Ti, Mo oder W aufweist, oder nanoskalige elektrisch leitfähige Partikel, die eine Verbindung, ausgewählt aus Titansuboxid, Titannitrid, Titancarbid, dotiertem (z.B. mit Fluor oder Antimon) oder undotiertem Zinnoxid, Indium-Zinnoxid (ITO) und dotiertem oder undotiertem Zinkoxid, aufweisen oder daraus bestehen. Bevorzugt weisen die als anorganischer Kleber eingesetzten nanoskaligen Aktivmassepartikel dieselbe Zusammensetzung auf, wie die Aktivmassepartikel selbst. Die als Kleber vorliegenden nanoskaligen Aktivmassenpartikel sind logischerweise jeweils solche, die zu der Verwendung der Elektrode als positive oder negative Elektrode kompatibel sind.

Bei beiden Elektroden kann im Falle einer beidseitig mit einer porösen Elektrodenschicht ausgerüsteten Ableitelektrode die Separatorschicht auf einer oder beiden Seiten aufgebracht sein, je nachdem was für den Batteriekunden wünschenswert für dessen Prozess ist.

Die mechanischen Eigenschaften der Separator-Elektroden-Einheit werden aufgrund der geringen Dicke der Separatorschicht im wesentlichen von der Elektrode bestimmt. Typische Zugfestigkeiten liegen im Bereich der Zugfestigkeiten des für die Herstellung verwendeten metallischen Trägers. Bei Streckmetallen liegt diese, je nach verwendetem Streckmetalle, bei ca. 10N/cm und höher und bei Verwendung von Metallfolien bei größer 15 N/cm. Die Separator-Elektroden-Einheit kann flexibel sein, wobei die Flexibilität im wesentlichen von der Flexibilität der Ableitelektroden bestimmt wird. Vorzugsweise lässt sich eine erfindungsgemäße Separator-Elektroden-Einheit bis auf jeden Radius bis herab zu 100 m, vorzugsweise auf einen Radius von 100 m bis herab zu 1 cm und besonders bevorzugt von 1 cm bis herab zu 5, 4, 3, 2 oder 1 mm biegen.

Damit die erfindungsgemäße Separator-Elektroden-Einheit über einen Abschaltmechanismus (Shut-Down-Mechanismus) verfügt kann es vorteilhaft sein, wenn die Separatorschicht eine Beschichtung mit Partikeln, die bei einer gewünschten Abschalttemperatur schmelzen, sogenannte Abschaltpartikel, vorzugsweise Wachs- oder Polymerpartikeln aufweist. Besonders bevorzugte Materialien, aus denen die Abschaltpartikel bestehen können sind beispielweise natürliche oder künstliche Wachse, niedrigschmelzende Polymere, wie z.B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Die Beschichtung mit Abschaltpartikeln kann auf der Separatorschicht und/oder zwischen der Separatorschicht und der Elektrode vorhanden sein. Je nach gewünschter Abschalttemperatur ist es aber bevorzugt, wenn die Beschichtung mit Abschaltpartikeln auf der Separatorschicht aufgebracht ist. Dies ist unter anderem durch die Art der Herstellung der Abschaltpartikelbeschichtung vorgegeben. Eine Beschichtung zwischen der Separatorschicht und der Elektrode müsste so erfolgen, dass die Abschaltpartikelschicht auf die Elektrode aufgebracht wird und anschließend die Separatorschicht aufgebracht wird und ist deshalb nur dann möglich, wenn die Abschalttemperatur und damit der Schmelzpunkt des als Abschaltpartikel verwendeten Materials, beispielsweise natürliches oder künstliches Wachs, niedrigschmelzende Polymere, wie z.B. Polyolefine, über der Temperatur liegt, die bei der Verfestigung der Separatorschicht angewendet werden muss.

Vorzugsweise weisen die Abschaltpartikel eine mittlere Partikelgröße (D_{w}) auf, die größer oder gleich der mittleren Porengröße (dₛ) der Poren der Separatorschicht ist und, falls sich die Abschaltschicht zwischen Separator und Elektrode befindet, ebenfalls größer als die mittlere Porengröße (d) der Poren der porösen Elektrode ist. Dies ist insbesondere deshalb vorteilhaft, weil so ein Eindringen und Verschließen der Poren der Elektroden oder der Separatorschicht, das eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt.

Die gesamte Dicke der Separator-Elektroden-Einheit (ohne die zusätzliche Abschaltpartikelschicht) ist stark abhängig von der Dicke der Elektrode. Typischerweise ist die Dicke im Falle beidseitig beschichteter Elektroden kleiner 350 µm, bevorzugt kleiner 250 µm und ganz besonders bevorzugt kleiner 200 µm, bei gleichzeitig konstanter Kapazität der Zelle.

Die erfindungsgemäßen Separator-Elektroden-Einheiten werden vorzugsweise durch ein Verfahren zur Herstellung von Separator-Elektroden-Einheiten hergestellt, welches sich dadurch auszeichnet, dass eine poröse, als positive (Kathode) oder negative (Anode) Elektrode in einer Lithium-Batterie geeignete Elektrode durch Aufbringen einer Suspension, die Aktivmassepartikel suspendiert in einem Sol oder eine Suspension aus nanoskaligen Aktivmassepartikeln in einem Lösemittel aufweist, und Verfestigen der Suspension zu einer rein anorganischen porösen Elektrodenschicht auf einer Ableitelektrode durch zumindest eine thermische Behandlung, erzeugt wird und dass auf dieser Elektrode als Substrat eine poröse anorganische, nicht elektrisch leitende Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird.

### Herstellung der Elektrode

Je nach dem ob die Elektrode bzw. die mit ihr erzeugte SEA als positive oder negative Elektrode verwendet werden soll, wird eine Suspension eingesetzt die für den jeweiligen Einsatzzweck geeignete Aktivmassenpartikel aufweisen. So wird zur Herstellung der porösen Elektrodenschicht der positiven Elektrode vorzugsweise eine Suspension eingesetzt, die Aktivmassepartikel, ausgewählt aus Partikeln die zumindest eines der Elemente Co, Ni, Mn, V, Fe oder P aufweisen, aufweist. Vorzugsweise werden Aktivmassepartikel eingesetzt, die eine Verbindung, ausgewählt aus, LiNi_{1-y}Co_{y}O₂, (mit y = 0 bis 1), LiMn₂O₄, LiMnO₂, LiFePO₄, LiVOPO₄ und/oder LiNiVO₄ aufweisen oder aus diesen bestehen. Zur Herstellung der porösen Elektrodenschicht der negativen Elektrode wird vorzugsweise eine Suspension eingesetzt, die Aktivmassepartikel, ausgewählt aus Partikeln die zumindest eines der Elemente C, Si, Nb, Ti. Mo oder W aufweisen, aufweist. Besonders bevorzugt werden Aktivmassepartikel eingesetzt, die eine Verbindung/Element ausgewählt aus Graphit, Ruß, Silizium, Graphit-Silizium-Mischungen, Lithium-Silizium- oder Lithium-Zinn-enthaltende Legierungen, LiNb₂O₅, LiTiO₂, Li₄Ti₅O₁₂, LiMoO₂ und/oder LiWO₂ aufweisen oder aus diesen bestehen. Vorzugsweise werden Aktivmassepartikel eingesetzt, die eine mittlere Partikelgröße von 0,1 bis 25 µm aufweisen. Durch den Einsatz von Aktivmassepartikeln im angegebenen Bereich kann eine besonders hohe Porosität der porösen Elektrodenschicht erzielt werden, wodurch eine höhere Speicherkapazität bei der Batterie erreicht werden kann.

Zur Herstellung der Suspension zur Herstellung der positiven Elektrodenschicht wird vorzugsweise ein Sol, welches zumindest eines der Elemente Co, Ni, Mn, V, Fe, P, z.B. in Form von LiNi_{1-y}Co_{y}O₂, (mit y = 0 bis 1), LiMn₂O₄, LiMnO₂, LiFePO₄, LiVOPO₄ und/oder LiNiVO₄ oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist, eingesetzt. Ebenso ist es möglich, wenn zur Herstellung der Suspension zur Herstellung der positiven Elektrodenschicht eine Dispersion von nanoskaligen Partikeln mit einer mittleren Primärpartikelgröße von kleiner 50 nm, welche zumindest eines der Elemente Co, Ni, Mn, V, Fe oder P aufweisen oder welche eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweisen oder aus diesen einer dieser Verbindungen bestehen, eingesetzt wird. Bevorzugt sind die eingesetzte nanoskaligen Partikel nanoskalige Aktivmassepartikel, die eine Verbindung, ausgewählt aus, LiNi_{1-y}Co_{y}O₂, (mit y = 0 bis 1), LiMn₂O₄, LiMnO₂, LiFePO₄, LiVOPO₄ und/oder LiNiVO₄ aufweisen oder aus diesen bestehen. Zur Herstellung der Suspension zur Herstellung der negativen Elektrodenschicht kann z.B. ein Sol, welches zumindest eines der Elemente Nb, Ti, Mo, W, z.B. in Form von LiNb₂O₅, LiTiO₂, Li₄Ti₅O₁₂, LiMoO₂ und/oder LiWO₂ oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist, eingesetzt werden. Auch hier ist es möglich zur Herstellung der Suspension zur Herstellung der negativen Elektrodenschicht eine Dispersion von nanoskaligen Partikeln mit einer mittleren Primärpartikelgröße von kleiner 50 nm, welche zumindest eines der Elemente C (z.B. als Ruß), Si, Nb, Ti. Mo oder W aufweisen oder welche zumindest eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweisen oder daraus bestehen, einzusetzen. Bevorzugt sind die eingesetzte nanoskaligen Partikel nanoskalige Aktivmassepartikel, die eine Verbindung/Element ausgewählt aus Graphit, Silizium, Graphit-Silizium-Mischungen, Lithium-Silizium- oder Lithium-Zinn-enthaltende Legierungen, LiNb₂O₅, LiTiO₂, Li₄Ti₅O₁₂, LiMoO₂ und/oder LiWO₂ aufweisen oder aus diesen bestehen. Die Suspension zur Herstellung der porösen Elektrodenschichten werden bevorzugt durch Aufdrucken, Aufpressen, Einpressen, Aufrollen, Aufrakeln, Aufstreichen, Tauchen, Spritzen oder Aufgießen auf die Ableitelektrode aufgebracht.

Die Sole werden durch Hydrolysieren zumindest einer Verbindung der genannten Elemente erhalten. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat oder eine Alkoholatverbindung vorzugsweise der Elemente Ti, Co oder Mn, wie z.B. TiCl₄ oder Mn(NO₃)₂ hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden.

In einer weiteren Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen wie z.B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5-fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50% möglich aber nicht sehr sinnvoll ist, da beim Unterschreiten dieses Wertes,die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen gelöst wird, bevor die eigentliche Hydrolyse vorgenommen wird.

Wie gesagt können neben der Verwendung einer Suspension aus Aktivmassepartikel und einem Sol auch solche Suspensionen eingesetzt werden, die Aktivmassepartikel, suspendiert in einer Dispersion von nanoskaligen Aktivmassepartikeln in einem Lösemittel aufweisen. Die nanoskaligen Aktivmassepartikel oder Partikel von elektrisch leitfähigen Materialien weisen vorzugsweise eine mittlere Primärpartikelgröße kleiner 50 nm, bevorzugt von 1 bis 50 nm, besonders bevorzugt von 5 bis 25 nm auf. Solche nanoskaligen Aktivmassepartikel können z.B. durch einen pyrogenen Prozess wie der Aerosil-Herstellung oder über die Sol-Gel-Chemie erhalten werden. Als Lösemittel für diese Suspensionen eignen sich neben Wasser insbesondere Alkohole, insbesondere C1 bis C4 Alkohole, bevorzugt Methanol, Ethanol oder Propanole, wie z.B. Isopropanol.

Die Aktivmassepartikel werden vorzugsweise durch intensives Mischen in dem Sol oder der Dispersion aus nanoskaligen Aktivmassepartikeln in einem Lösemittel, suspendiert. Die Suspension zur Herstellung der Elektrodenschicht kann z.B. durch Aufdrucken, Aufpressen, Einpressen, Aufrollen, Aufrakeln, Aufstreichen, Tauchen, Spritzen oder Aufgießen auf die Ableitelektrode aufgebracht werden. Vorzugsweise wird zur Herstellung der Elektrodenschicht eine Suspension eingesetzt, bei der das Gewichtsverhältnis von Aktivmassepartikeln zu Sol oder Dispersion, welche nanoskalige (Aktivmasse-)partikel aufweist, von 1 zu 100 bis 2 zu 1, vorzugsweise von 1 zu 50 bis 1 zu 5 und besonders bevorzugt von 1 zu 4 bis 1 zu 1 beträgt.

Die erfindungsgemäßen porösen Elektrodenschichten werden durch Verfestigen der Suspension auf der Ableitelektrode aufgebracht, so das auf diese Weise eine für die erfindungsgemäße Separator-Elektroden-Einheit geeignete Elektrode erhalten wird. Dieses Prinzip ist bereits in WO 99/15262 beschrieben. Bevorzugt wird die auf die Ableitelektrode aufgebrachte Suspension durch Erwärmen auf 50 bis 700 °C, vorzugsweise 100 bis 600 °C und ganz besonders bevorzugt auf 300 bis 500 °C verfestigt. Das Erwärmen erfolgt vorzugsweise maximal 60 Minuten, bevorzugt maximal 10 Minuten und besonders bevorzugt von 0,1 bis 10 Minuten, bevorzugt bei einer Temperatur von 300 bis 500 °C. Die Temperatur und Dauer der Behandlung wird durch die Temperaturbeständigkeit der in der eingesetzten Ableitelektrode vorhandenen Materialien vorgegeben und ist entsprechend anzupassen. Das erfindungsgemäße Erwärmen kann mittels erwärmter Luft, Heißluft, Infrarotstrahlung oder durch andere Erwärmungsmethoden nach dem Stand der Technik erfolgen.

Die erfindungsgemäße Beschichtung der Ableitelektrode kann diskontinuierlich oder kontinuierlich durchgeführt werden. Vorzugsweise wird die Beschichtung, also die Herstellung der Elektrodenschicht so durchgeführt, dass die als Substrat eingesetzte Ableitelektrode von einer Rolle mit einer Geschwindigkeit von 1 m/h bis 2 m/s, vorzugsweise mit einer Geschwindigkeit von 0,5 m/min bis 20 m/min und ganz besonders bevorzugt mit einer Geschwindigkeit von 1 m/min bis 5 m/min abgerollt wird, durch zumindest eine Apparatur durchläuft, welche die Suspension auf die Oberfläche der Ableitelektrode aufbringt, wie z.B. eine Walze oder ein Rakel, und zumindest eine weitere Apparatur durchläuft, welche das Verfestigen der Suspension auf der Ableitelektrodenoberfläche und gegebenenfalls im inneren der Ableitelektrode, wenn z.B. ein Streckmetall verwendet wird, durch Erwärmen ermöglicht, wie z.B. ein elektrisch beheizter Ofen, und am Ende die so hergestellte Elektrode auf einer zweiten Rolle aufgerollt wird. Auf diese Weise ist es möglich, die für die erfindungsgemäße Separator-Elektroden-Einheit benötigte Elektrode im Durchlaufverfahren herzustellen.

### Herstellung der Separatorschicht

Als Substrat, auf welches die Separatorschicht aufgebracht wird, wird eine wie gerade beschrieben hergestellte Elektrode verwendet. Je nach dem für welchen Zweck die SEA eingesetzt werden soll, wird eine als positive oder als negative Elektrode geeignete Elektrode eingesetzt.

Die erfindungsgemäße Beschichtung einer negativen Elektrode mit der keramischen Separatorschicht ist bevorzugt, da diese meist weniger feuchtigkeitsempfindlich sind als die positiven Elektroden, die im allgemeinen die Li-Verbindung enthalten. Werden positive Elektroden als Basis verwendet, muss sicher gestellt werden, dass die SEA vor dem Zusammenbau der Batterie absolut wasserfrei ist.

Die eingesetzten Elektroden können auf einer oder beiden Seiten der Ableitelektrode mit einer porösen Elektrodenschicht ausgerüstet sein. Bevorzugte Elektroden weisen eine möglichst hohe Porosität (bestimmt mittels Hg-Porosimetrie), vorzugsweise im Bereich von 20 bis 50 % auf, um eine möglichst große aktive Oberfläche bereitzustellen. Die Porosität kann z.B. mit einem Porosimeter 4000 von Carlo Erba Instruments bestimmt werden. Der Quecksilber-Porosimetrie liegt die Washburn-Gleichung zu Grunde (E. W. Washbum, "Note on a Method of Determining the Distribution of Pore Sizes in a Porous Material", Proc. Natl. Acad. Sci., 7, 115-16 (1921)). Besonders bevorzugte Elektroden weisen mittlere Porengrößen (d) von 0,1 bis 20 µm, vorzugsweise von 1 bis 10 µm auf. Als Substrat einzusetzende beidseitig beschichtete positive Elektroden haben vorzugsweise eine Dicke von 20 bis 250 µm und ein Flächengewicht von 50 bis 800 g/m². Als Substrat einsetzbare beidseitig beschichtete negative Elektroden haben vorzugsweise eine Dicke von 200 bis 250 µm und ein Flächengewicht von 350 bis 450 g/m².

Die erfindungsgemäß zur Herstellung der Separatorschicht verwendete Suspension weist vorzugsweise Metalloxid-Partikel mit einer mittleren Partikelgröße (D_{g}) größer, gleich oder auch kleiner als die mittlere Porengröße (d) der Poren der porösen positiven Elektrode auf, wobei beim Vorhandensein von Partikeln mit einer mittleren Partikelgröße D_{g} kleiner oder gleich der mittleren Poregröße (d) der porösen Elektrode zusätzlich ein Mittel in der Suspension vorhanden sein muss, mit welchem die Viskosität der Suspension erhöht werden kann, so dass ein zu tiefes Eindingen der Suspension in die poröse Elektrode verhindert werden kann. Als Metalloxid-Partikel oder als Metalloxid-Partikel mit einer mittleren Partikelgröße (D_{g}) größer oder kleiner als die mittlere Porengröße (d) der Poren der porösen Elektrodenschicht der eingesetzten Elektroden werden zur Herstellung der Suspension vorzugsweise Al₂O₃- und/oder ZrO₂ -Partikel eingesetzt. Besonders bevorzugt weisen die als Metalloxid-Partikel eingesetzten Partikel eine mittlere Partikelgröße D_{g} von kleiner 10 µm, vorzugsweise von kleiner 5 µm und ganz besonders bevorzugt von kleiner 3 µm auf.

Es hat sich herausgestellt, dass der Einsatz von handelsüblichen Metalloxidpartikeln unter Umständen zu unbefriedigenden Ergebnissen führt, da häufig eine sehr große Korngrößenverteilung vorliegt. Es werden deshalb bevorzugt Metalloxidpartikel eingesetzt, die durch ein herkömmliches Verfahren, wie z.B. Windsichten oder Hydroklassieren, klassiert wurden. Durch diese Maßnahme wird erreicht, dass die anorganische poröse Separatorschicht eine sehr gleichmäßige Porengrößenverteilung aufweist.

Die Suspension kann z.B. durch Aufdrucken, Aufpressen, Einpressen, Aufrollen, Aufrakeln, Aufstreichen, Tauchen, Spritzen oder Aufgießen auf das Substrat aufgebracht werden. Vorzugsweise wird eine Suspension eingesetzt, bei der das Gewichtsverhältnis von Metalloxidpartikeln zu Sol von 1 zu 1000 bis 2 zu 1, vorzugsweise von 1 zu 100 bis 1 zu 5 und besonders bevorzugt von 1 zu 4 bis 1 zu 1 beträgt.

Die zur Herstellung der Beschichtung verwendete Suspension weist zumindest ein anorganisches Oxid des Aluminiums, Siliziums und/oder Zirkoniums und zumindest ein Sol, der Elemente Al, Zr und Si auf, und wird durch Suspendieren von Partikeln zumindest eines Oxids in zumindest einem dieser Sole hergestellt.

Die Sole werden durch Hydrolisieren zumindest einer Verbindung der Elemente Zr, Al, Si erhalten. Ebenso kann es vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat oder eine Alkoholatverbindung der Elemente Zr, Al oder Si hydrolisiert. Die Hydrolyse erfolgt vorzugsweise in Gegenwart von Wasser, Wasserdampf, Eis, oder einer Säure oder eine Kombination dieser Verbindungen.

Es können wiederum partikuläre oder polymere Sole eingesetzt werden. Bezüglich der Herstellung der Sole wird auf die Herstellung der Sole im Abschnitt "Herstellung der Elektrode" verwiesen. Dadurch dass die eingesetzten Elektroden keinerlei organische Verbindungen, insbesondere keine Polymere aufweist, kann auf den Zusatz von Haftvermittlern zu den Solen verzichtet werden.

Je nach der Art der verwendeten Suspension kann es notwendig sein, die Viskosität der Suspension einzustellen. Dies ist insbesondere dann notwendig, wenn eine Suspension eingesetzt wird, die Partikel aufweist, die kleiner als die mittlere Porenweite der Poren der porösen Elektrodenschicht sind. Durch Einstellen einer entsprechend hohen Viskosität der Suspension wird in Abwesenheit äußerer Scherkräfte ein Eindringen der Suspension in die Poren der Elektrode verhindert (Strukturviskosität, nicht-newtonsches Verhalten). Ein solches Verhalten lässt sich durch Zugabe von Hilfsstoffen erzielen, die das Fließverhalten beeinflussen. Zur Einstellung der Viskosität der Suspension werden als Hilfsstoffe ebenfalls bevorzugt anorganische Materialien verwendet. Besonders bevorzugt werden der Suspension zur Einstellung der Viskosität der Suspension pyrogene Kieselsäuren, wie z.B. Aerosile der Degussa AG, wie z.B. Aerosil 200, zugegeben. Da diese Substanzen als Hilfsstoffe zur Einstellung der Viskosität sehr wirksam sind, ist es ausreichend, wenn der Massenanteil an Kieselsäure an der Suspension von 0,1 bis 10 Gew.-%, bevorzugt von 0,5 bis 5 Gew.-% beträgt.

Die erfindungsgemäßen Separatorschichten werden durch Verfestigen der Suspension auf dem Substrat, also der Oberfläche der Elektrode aufgebracht, so das auf diese Weise eine Separator-Elektroden-Einheit erhalten wird. Dieses Prinzip ist bereits in WO 99/15262 beschrieben. Bevorzugt wird die auf die Elektrode aufgebrachte Suspension durch Erwärmen auf 50 bis 700 °C, vorzugsweise 100 bis 600 °C und ganz besonders bevorzugt auf 300 bis 500 °C verfestigt.

Das Erwärmen erfolgt vorzugsweise maximal 60 Minuten, bevorzugt maximal 10 Minuten und besonders bevorzugt von 0,1 bis 10 Minuten, bevorzugt bei einer Temperatur von 300 bis 500 °C. Die Temperatur und Dauer der Behandlung wird durch die Temperaturbeständigkeit der in der eingesetzten Elektrode vorhandenen Materialien vorgegeben und ist entsprechend anzupassen.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Die erfindungsgemäße Beschichtung der Elektrode kann diskontinuierlich oder kontinuierlich durchgeführt werden. Vorzugsweise wird die Herstellung der Separatorschicht so durchgeführt, dass die als Substrat eingesetzte Elektrode von einer Rolle abgerollt wird mit einer Geschwindigkeit von 1 m/h bis 2 m/s, vorzugsweise mit einer Geschwindigkeit von 0,5 m/min bis 20 m/min und ganz besonders bevorzugt mit einer Geschwindigkeit von 1 m/min bis 5 m/min, durch zumindest eine Apparatur durchläuft, welche die Suspension auf die Oberfläche der Elektrode aufbringt, wie z.B. eine Walze, und zumindest eine weitere Apparatur durchläuft, welche das Verfestigen der Suspension auf der Elektrodenoberfläche durch Erwärmen ermöglicht, wie z.B. ein elektrisch beheizter Ofen, und am Ende die so hergestellte Separator-Elektroden-Einheit auf einer zweiten Rolle aufgerollt wird. Auf diese Weise ist es möglich, die erfindungsgemäße Separator-Elektroden-Einheit im Durchlaufverfahren herzustellen.

Soll die Separator-Elektroden-Einheit mit einem automatischen Abschaltmechanismus ausgerüstet werden, so kann dies z.B. dadurch geschehen, dass nach dem Verfestigen der auf die Elektrode aufgebrachten Suspension eine Schicht aus Partikeln, die bei einer gewünschten Temperatur Schmelzen und die Poren der Separatorschicht verschließen, so genannte Abschaltpartikeln, zur Erzeugung eines Abschaltmechanismus auf die Separator-Elektroden-Einheit aufgebracht und fixiert wird. Die Schicht aus Abschaltpartikeln kann z.B. durch Aufbringen einer Suspension von Wachspartikeln mit einer mittleren Partikelgröße größer der mittleren Porengröße der Separatorschicht in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Wachspartikeln in der Suspension.

Da die anorganischen Separatorschichten häufig einen sehr hydrophilen Charakter haben, hat es sich als vorteilhaft erwiesen, wenn die Separator-Elektroden-Einheit unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Separatorschicht vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Separatorschicht durch Behandlung mit Alkyl-, Aryl- oder Fluoralkylsilanen, wie sie z.B. unter dem Namen Markennamen Dynasilan von der Degussa vertrieben werden, hydrophobiert. Es können dabei z.B. die bekannten Methoden der Hydrophobierung, die unter anderem für Textilien angewendet werden (D. Knittel; E. Schollmeyer; Melliand Textilber. (1998) 79(5), 362-363), unter geringfügiger Änderung der Rezepturen, auch für die porösen Separatorschichten bzw. die Separator-Elektroden-Einheit angewendet werden. Zu diesem Zweck wird die Separator-Elektroden-Einheit mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z.B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die Separatorenschicht der Separator-Elektroden-Einheit aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Separatorenschicht vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d.h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z.B. Alkohol, Ether oder Ketone, oder einem Lösemittelgemisch auf die Separatorschicht und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Separatorschicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z.B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Separatorschicht erfolgt. Eine solch hohe Viskosität der Suspension kann z.B. dadurch erreicht werden, dass der Suspension Hilfsstoffe, die das Fließverhalten beeinflussen, wie z.B. Kieselsäuren (Aerosil, Degussa) hinzugefügt werden. Beim Einsatz von Hilfsstoffen wie z.B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine Separatorschicht aufgebracht werden, auch wenn diese nicht vor dem Aufbringen hydrophobiert wurde. Natürlich kann eine Haftvermittler aufweisende Suspension auch auf eine hydrophobierte Separatorschicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z.B. AMEO (3-Aminopropyltriethoxysilan), MEMO (3-methacryloxypropyltrimethoxysilan), Silfin (Vinylsilan + Initiator + Katalysator), VTEO (Vinyltriethoxysilan) oder VTMO (Vinyltrimethoxysilan). Solche Silane sind z.B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Separatorschicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Separatorschicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Partikel nach dem Aufbringen auf die poröse anorganische Separatorschicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der Suspension mit anschließendem Trocknen sowie ein eventuelles Erwärmen über die Glasübergangstemperatur kann kontinuierlich oder quasi kontinuierlich durchgeführt werden. Wird eine flexible Separator-Elektroden-Einheit als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäße Separator-Elektroden-Einheiten können in Batterien, insbesondere Lithium-Batterien verwendet werden. Die erfindungsgemäße n Separator-Elektroden-Einheiten sind für primäre und sekundäre (wiederaufladbare) Lithium-Batterien geeignet. Bei der erfindungsgemäßen Verwendung der Separator-Elektroden-Einheit in Batterien wird diese z.B. mit der Gegenelektode verbunden und mit Elektrolyt getränkt. Durch die besonders hohe Porosität und Porengröße sowie der geringen Dicke der Separatorschicht ist die erfindungsgemäße Separator-Elektroden-Einheit insbesondere geeignet um in Lithium-Hochleistungs- und Hochenergiebatterien verwendet zu werden.

Gegenstand der vorliegenden Erfindung sind auch Lithium-Batterien selbst, wobei diese primäre und sekundäre Batterien sein können, die eine erfindungsgemäße Separator-Elektroden-Einheit aufweisen. Solche Batterien können auch Lithium-Hochleistungs- und -Hochenergiebatterien sein. Die Separatorschicht der erfindungsgemäßen Separator-Elektroden-Einheit weist bei solchen Lithium-Batterien üblicherweise als Elektrolyten Lithiumsalze mit großen Anionen in Carbonaten als Lösemittel auf. Geeignete Lithiumsalze sind z.B. LiClO₄, LiBF₄, LiAsF₆, LiCF₃SO₃ oder LiPF₆, wobei LiPF₆ besonders bevorzugt ist. Als Lösemittel geeignete organische Carbonate sind z.B. Ethylencarbonat (EC), Propylencarbonat (PC), Dimethylcarbonat (DMC), Ethylmethylcarbonat oder Diethylcarbonat oder Mischungen davon.

Ebenso gut geeignet sind die erfindungsgemäßen Separatoren für den Einsatz in Batterien, die schnell aufgeladen werden sollen. Durch die hohe Temperaturbeständigkeit des erfindungsgemäßen Separators ist eine Batterie, die mit diesem Separator ausgerüstet ist, nicht so temperaturempfindlich und kann daher den Temperaturanstieg aufgrund der schnellen Ladung ohne negative Veränderungen des Separators bzw. ohne Beschädigung der Batterie dulden. Folglich sind diese Batterien deutlich schneller aufzuladen. Dies ist ein deutlicher Vorteil beim Einsatz solcher Art ausgerüsteter Batterien in Elektrofahrzeugen, da diese nicht mehr über viele Stunden geladen werden müssen, sondern das Aufladen innerhalb von deutlich kürzeren Zeiträumen, d.h. innerhalb weniger Stunden und bevorzugt in weniger als einer Stunde, durchführbar ist.

Die vorliegende Erfindung wird durch die nachfolgenden Beispiele beschrieben, ohne darauf beschränkt zu sein.

### Beispiel 1: Herstellung einer erfindunsgemäßen positiven Elektrode

Zur Herstellung eines TiO₂-Sol werden 10 g Ti(i-OProp)₄ in 89 g Isopropanol gelöst. Zu dieser Lösung gibt man 1 g 5 % HNO₃. Den entstandenen Niederschlag rührt man für 3 Tage bei Raumtemperatur mit einem Magnetrührer. 80 g LiCoO₂ (Ferro), 10 g Graphit (KS6, Timcal) und 2 g Ruß (Superior Graphite) werden in obigem TiO₂-Sol dispergiert.

Eine Alu-Folie mit einer Dicke von 30 µm wird mit dieser Dispersion durch eine Rakelprozeß (Rakelspalt: 200 µm) beschichtet. Die Elektrode wird bei 80 bis 100°C mit warmer Luft getrocknet und dann bei 250°C für 30 min verfestigt.

### Beispiel 2: Herstellung einer erfindunsgemäßen negativen Elektrode

Zur Herstellung eines TiO₂-Sol werden 10 g Ti(i-OProp)₄ in 89 g Isopropanol gelöst. Zu dieser Lösung gibt man 1 g 5 % HNO₃. Den entstandenen Niederschlag rührt man für 3 Tage bei Raumtemperatur mit einem Magnetrührer. 79 g LiTiO₃ (Versuchsprodukt Degussa, hergestellt durch Flammenpyrolyse), 1 g Li₂O (Merck), 10 g Graphit (KS6, Timcal) und 2 g Ruß (Superior Graphite) werden in obigem TiO₂-Sol dispergiert.

Eine Alu-Folie mit einer Dicke von 30 µm wird mit dieser Dispersion durch eine Rakelprozeß (Rakelspalt: 200 µm) beschichtet. Die Elektrode wird bei 80 bis 100°C mit warmer Luft getrocknet und dann bei 250°C für 30 min verfestigt.

### Beispiel 3: Herstellung einer erfindungsgemäßen Separator-Kathoden-Einheit SEA100K

75 g Al₂O₃ (AlCoA, CT3000 SG) werden in 160 g Ethanol dispergiert. Zu dieser Lösung gibt man 20 g Tetraethoxysilan (Dynasilan A, Degussa AG) sowie 15 g 5 % HNO₃. Die Mischung wird über Nacht gerührt, um eine gute Dispergierung des Al₂O₃-Pulver zu erhalten.

In einem diskontinuierlichen Aufrakelprozess (Rakelspalt: 50 µm, Vortrieb: 0,5 m/min) wird damit eine Elektrode gemäß Beispiel 1 beschichtet und bei 250°C für 30 min getrocknet und verfestigt. Das Auftragsgewicht beträgt jetzt ca. 45 g/m², die Separatorschichtdicke nur knapp 20 µm. Die mittlere Porengröße in der Separatorschicht beträgt etwa 100 nm.

### Beispiel 4: Herstellung einer erfindungsgemäßen Separator-Anoden-Einheit SEA240A

75 g Al₂O₃ (AlCoA, CT3000 SG) werden in 160 g Ethanol dispergiert. Zu dieser Lösung gibt man 20 g Tetraethoxysilan (Dynasilan A, Degussa AG) sowie 15 g 5 % HNO₃. Die Mischung wird über Nacht gerührt, um eine gute Dispergierung des Al₂O₃-Pulver zu erhalten.

In einem diskontinuierlichen Aufrakelprozess (Rakelspalt: 50 µm, Vortrieb: 0,5 m/min) wird damit eine Elektrode gemäß Beispiel 2 beschichtet und bei 250°C für 30 min getrocknet und verfestigt. Das Auftragsgewicht beträgt jetzt ca. 45 g/m², die Separatorschichtdicke nur knapp 20 µm. Die mittlere Porengröße in der Separatorschicht beträgt etwa 240 nm.

### Beispiel 5: Herstellung einer erfindungsgemäßen Separator-Anoden-Einheit SEA240A

50 g ZrO₂ (Degussa, Aerosil VPH) werden in 80 g Ethanol und 80 g Wasser dispergiert. Zu dieser Lösung gibt man 20 g Tetraethoxysilan (Dynasilan A, Degussa AG) sowie 15 g 5 % HNO₃. Die Mischung wird über Nacht gerührt, um eine gute Dispergierung des Al₂O₃-Pulvers zu erhalten.

In einem diskontinuierlichen Aufrakelprozess (Rakelspalt: 50 µm, Vortrieb: 0,5 m/min) wird damit eine Elektrode gemäß Beispiel 2 beschichtet und bei 250°C für 30 min getrocknet und verfestigt. Das Auftragsgewicht beträgt jetzt ca. 10 g/m², die Separatorschichtdicke nur knapp 5 µm. Die mittlere Porengröße in der Separatorschicht beträgt etwa 30 nm.

### Beispiel 6:

### Li-Batterie, die eine erfindungsgemäße Separator-Elektroden-Einheit enthält

Aus der Separator-Kathoden-Einheit von Beispiel 3 und der Anoden aus Beispiel 2 wird eine Batteriezelle durch laminieren der Separator-Elektroden-Einheit mit der Anode gebaut. Die Batterie wird mit einem Elektrolyten aus einer 1 molare Lösung von LiPF₆ in Ethylencarbonat/Dimethylcarbonat getränkt. Die Batterie wird stabil über mehrere hundert Zyklen laufen. Der irreversible Gesamtverlust ist kleiner als 20%.

### Beispiel 7:

### Li-Batterie, die eine erfindungsgemäße Separator-Elektroden-Einheit enthält

Aus der Kathoden von Beispiel 1 und der Separator-Anoden-Einheit aus Beispiel 4 wird eine Batteriezelle durch laminieren der Separator-Elektroden-Einheit mit der Kathode gebaut. Die Batterie wird mit einem Elektrolyten aus einer 1 molaren Lösung von LiPF₆ in Ethylencarbonat/Dimethylcarbonat getränkt. Die Batterie wird stabil über mehrere hundert Zyklen laufen. Der irreversible Gesamtverlust ist kleiner als 20%.

## Patentansprüche

1. Separator-Elektroden-Einheit, umfassend eine poröse, als Elektrode in einer Lithium-Batterie geeignete Elektrode und eine auf dieser Elektrode aufgebrachte Separatorschicht,
wobei die Separator-Elektroden-Einheit (SEA) eine anorganische Separatorschicht, die zumindest zwei Fraktionen von Metalloxidpartikeln aufweist, die sich in ihrer mittleren Partikelgröße und/oder in dem Metall voneinander unterscheiden, und eine Elektrode aufweist,
**dadurch gekennzeichnet,**
**dass** deren Aktivmassepartikel durch einen anorganischen, elektrisch leitfähigen Kleber untereinander und mit der Ableitelektrode verbunden sind,
wobei die Separator-Elektroden-Einheit keinerlei organischen polymeren Binder enthält.

2. Separator-Elektroden-Einheit gemäß Anspruch 1,
**dadurch gekennzeichnet,**
**dass** die Separatorschicht Metalloxid-Partikel mit einer mittleren Partikelgröße (D_{g}) größer oder kleiner als die mittlere Porengröße (d) der Poren der porösen Elektrode aufweist, die durch Metalloxid-Partikel, die eine Partikelgröße (Dₖ) kleiner als die Poren der porösen positiven oder negativen Elektrode aufweisen, verklebt sind, wobei die Separatorschicht beim Vorhandensein von Metalloxidpartikeln mit einer mittleren Partikelgröße (D_{g}) kleiner als die mittlere Porengröße (d) der Poren der porösen Elektrode eine Schicht bildet, die weniger als 20 D_{g} in die Poren eindringt.

3. Separator-Elektroden-Einheit gemäß einem der Ansprüche 1 oder 2,
**dadurch gekennzeichnet,**
**dass** die Separatorschicht eine Dicke (z) von kleiner 100 D_{g} bis größer gleich 1,5 D_{g} aufweist.

4. Separator-Elektroden-Einheit gemäß einem der Ansprüche 1 bis 3,
**dadurch gekennzeichnet,**
**dass** die Metalloxid-Partikel mit einer mittleren Partikelgröße (D_{g}) größer oder kleiner als die mittlere Porengröße (d) der Poren der porösen positiven Elektrode Al₂O₃- und/oder ZrO₂-Partikel sind.

5. Separator-Elektroden-Einheit gemäß einem der Ansprüche 1 bis 4,
**dadurch gekennzeichnet,**
**dass** die Metalloxid-Partikel mit einer mittleren Partikelgröße (Dₖ) kleiner als die mittlere Porengröße (d) der Poren der porösen positiven oder negativen Elektrode SiO₂- und/oder ZrO₂-Partikel sind.

6. Separator-Elektroden-Einheit nach einem der Ansprüche 1 bis 5,
**dadurch gekennzeichnet,**
**dass** die Metalloxid-Partikel mit einer mittleren Partikelgröße (D_{g}) größer oder kleiner als die mittlere Porengröße (d) der Poren der porösen positiven oder negativen Elektrode eine mittlere Partikelgröße (D_{g}) von kleiner 10 µm aufweisen.

7. Separator-Elektroden-Einheit nach einem der Ansprüche 1 bis 6,
**dadurch gekennzeichnet,**
**dass** die Separatorschicht eine weitere Beschichtung mit Partikeln, die bei einer gewünschten Abschalttemperatur schmelzen, sogenannte Abschaltpartikel, aufweist.

8. Separator-Elektroden-Einheit gemäß einem der Ansprüche 1 bis 7,
**dadurch gekennzeichnet,**
**dass** die Separatorschicht eine Porosität von 30 bis 70 % aufweist.

9. Separator-Elektroden-Einheit gemäß einem der Ansprüche 1 bis 8,
**dadurch gekennzeichnet,**
**dass** die Aktivmassepartikel eine mittlere Partikelgröße von 0,1 bis 25 µm aufweisen.

10. Separator-Elektroden-Einheit gemäß einem der Ansprüche 1 bis 9,
**dadurch gekennzeichnet,**
**dass** positive Elektroden Aktivmassen aufweisen, die zumindest eines der Elemente Co, Ni, Mn, V, Fe oder P aufweisen, und negative Elektroden Aktivmassen aufweisen, die als zumindest eines der Elemente C, Si, Nb, Ti. Mo oder W aufweisen.

11. Separator-Elektroden-Einheit gemäß Anspruch 10,
**dadurch gekennzeichnet,**
**dass** positive Elektroden Aktivmassen aufweisen, die ausgewählt sind aus, LiNi_{1-y}Co_{y}O₂, (mit y = 0 bis 1), LiMn₂O₄, LiMnO₂, LiFePO₄, LiVOPO₄ und/oder LiNiVO₄, und negative Elektroden Aktivmassen aufweisen, die ausgewählt sind aus Graphit, Silizium, Graphit-Silizium-Mischungen, Lithium-Silizium- oder Lithium-Zinn-enthaltende Legierungen,

12. Separator-Elektroden-Einheit gemäß einem der Ansprüche 1 bis 11,
**dadurch gekennzeichnet,**
**dass** der elektrisch leitende, anorganische Kleber einen mittlere Partikelgröße von 1 bis 100 nm aufweist.

13. Separator-Elektroden-Einheit gemäß einem der Ansprüche 1 bis 12,
**dadurch gekennzeichnet**,
das die Partikel des anorganischen Klebers ausgewählt sind aus Partikeln von Aktivmasse für Elektroden, wobei diese für positive Elektroden zumindest eines der Elemente Co, Ni, Mn, V, Fe oder P und für negative Elektroden zumindest eines der Elemente C, Si, Nb, Ti, Mo oder W aufweist oder aus Partikeln von Verbindungen, ausgewählt aus Titansuboxid, Titannitrid, Titancarbid, dotiertem oder undotiertem Zinnoxid, Indium-Zinnoxid (ITO) und dotiertem oder undotiertem Zinkoxid.

14. Separator-Elektroden-Einheit gemäß einem der Ansprüche 1 bis 13,
**dadurch gekennzeichnet,**
**dass** die Einheit ohne Beschädigung bis auf einen Radius bis herab zu 1 cm biegbar ist

15. Verfahren zur Herstellung einer Separator-Elektroden-Einheit gemäß einem der Ansprüche 1 bis 14,
**dadurch gekennzeichnet,**
**dass** eine poröse, als positive (Kathode) oder negative (Anode) Elektrode in einer Lithium-Batterie geeigneten Elektrode durch Aufbringen einer Suspension, die Aktivmassepartikel suspendiert in einem Sol oder einer Dispersion aus nanoskaligen Aktivmassepartikeln in einem Lösemittel aufweist, und Verfestigen der Suspension zu einer rein anorganischen porösen Elektrodenschicht auf einer Ableitelektrode durch zumindest eine thermische Behandlung, erzeugt wird und dass auf der so hergestellten Elektrode als Substrat eine poröse anorganische Beschichtung als Separatorschicht, durch Aufbringen einer Suspension, die Metalloxid-Partikel in einem Sol aufweist, und Verfestigen der anorganischen Separatorschicht auf der Elektrode durch zumindest eine thermische Behandlung, erzeugt wird.

16. Verfahren nach Anspruch 15,
**dadurch gekennzeichnet,**
**dass** eine Suspension zur Herstellung der porösen Elektrodenschicht der positiven Elektrode eingesetzt wird, die Aktivmassepartikel, ausgewählt aus Partikeln, die zumindest eines der Elemente Co, Ni, Mn, V, Fe oder P aufweisen, oder eine Suspension zur Herstellung der porösen Elektrodenschicht der negativen Elektrode eingesetzt wird, die Aktivmassepartikel, ausgewählt aus Partikeln, die zumindest eines der Elemente C, Si, Nb, Ti. Mo oder W aufweisen.

17. Verfahren nach Anspruch 15 oder 16,
**dadurch gekennzeichnet,**
**dass** Aktivmassepartikel eingesetzt werden, die eine mittlere Partikelgröße von 0,1 bis 20 µm aufweisen.

18. Verfahren gemäß einem der Ansprüche 15 bis 17,
**dadurch gekennzeichnet,**
**dass** zur Herstellung der Suspension zur Herstellung einer positiven Elektrodenschicht ein Sol, welches zumindest eines der Elemente Co, Ni, Mn, V, Fe, P oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist, und zur Herstellung einer negativen Elektrodenschicht ein Sol, welches zumindest eines der Elemente Nb, Ti. Mo, W oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist, oder zur Herstellung der Suspension zur Herstellung einer positiven Elektrodenschicht eine Dispersion von nanoskaligen Partikeln mit einer mittleren Primärpartikelgröße von kleiner 50 nm, welche zumindest eines der Elemente Co, Ni, Mn, V, Fe oder P oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist und zur Herstellung einer negativen Elektrodenschicht eine Dispersion von nanoskaligen Partikeln mit einer mittleren Primärpartikelgröße von kleiner 50 nm, welche zumindest eines der Elemente C, Si, Nb, Ti. Mo oder W oder eine Verbindung, ausgewählt aus Titansuboxid, Titannitrid, Titancarbid, dotiertem oder undotiertem Zinnoxid, Indium-Zinnoxid (ITO) und dotiertem oder undotiertem Zinkoxid, aufweist, eingesetzt wird und die Suspension durch Aufdrucken, Aufpressen, Einpressen, Aufrollen, Aufrakeln, Aufstreichen, Tauchen, Spritzen oder Aufgießen auf die Ableitelektrode aufgebracht wird.

19. Verfahren nach einem der Ansprüche 15 bis 18,
**dadurch gekennzeichnet,**
**dass** zur Herstellung der Elektrodenschicht eine Suspension eingesetzt wird, bei der das Gewichtsverhältnis von Aktivmassepartikel zu Sol oder Suspension, welche nanoskalige Aktivmassepartikel aufweist, von 1 zu 100 bis 2 zu 1 beträgt.

20. Verfahren nach einem der Ansprüche 15 bis 19,
**dadurch gekennzeichnet,**
**dass** die auf der Ableitelektrode aufgebrachte Suspension durch Erwärmen auf 50 bis 700 °C verfestigt wird.

21. Verfahren nach Anspruch 20,
**dadurch gekennzeichnet,**
**dass** das Erwärmen für 0,1 bis 10 Minuten bei einer Temperatur von 300 bis 500 °C erfolgt.

22. Verfahren nach einem der Ansprüche 15 bis 21,
**dadurch gekennzeichnet,**
**dass** zur Herstellung der Separatorschicht eine Suspension eingesetzt wird, die Metalloxid-Partikel mit einer mittleren Partikelgröße (D_{g}) größer oder kleiner als die mittlere Porengröße (d) der Poren der porösen Elektrode aufweist, wobei bei Vorhandensein von Partikeln mit einer mittleren Partikelgröße D_{g} kleiner der mittleren Poregröße d der porösen Elektrode zusätzlich Mittel in der Suspension vorhanden sind, die die Viskosität der Suspension erhöhen, und die Suspension zur Herstellung der Separatorschicht durch Aufdrucken, Aufpressen, Einpressen, Aufrollen, Aufrakeln, Aufstreichen, Tauchen, Spritzen oder Aufgießen auf das Substrat aufgebracht wird.

23. Verfahren nach einem der Ansprüche 15 bis 22,
**dadurch gekennzeichnet,**
**dass** als Metalloxid-Partikel oder als Metalloxid-Partikel mit einer mittleren Partikelgröße (D_{g}) größer oder kleiner als die mittlere Porengröße (d) der Poren der porösen positiven Elektrode zur Herstellung der Suspension Al₂O₃- und/oder ZrO₂-Partikel eingesetzt werden.

24. Verfahren nach einem der Ansprüche 15 bis 23,
**dadurch gekennzeichnet,**
**dass** eine Suspension zur Herstellung der Separatorschicht eingesetzt wird, die zumindest ein Sol der Elemente Al, Zr oder Si oder eine Mischung dieser Sole aufweist, und durch Suspendieren der Metalloxid-Partikel in zumindest einem dieser Sole hergestellt wird.

25. Verfahren nach einem der Ansprüche 15 bis 24,
**dadurch gekennzeichnet,**
**dass** die Sole durch Hydrolisieren zumindest einer Alkoholatverbindung der jeweiligen Elemente mit Wasser oder einer Säure oder eine Kombination dieser Verbindungen erhalten werden.

26. Verfahren nach einem der Ansprüche 15 bis 25,
**dadurch gekennzeichnet,**
**dass** die auf der Elektrode aufgebrachte Suspension durch Erwärmen auf 50 bis 700 °C verfestigt wird.

27. Verfahren nach Anspruch 26,
**dadurch gekennzeichnet,**
**dass** das Erwärmen für 0,1 bis 10 Minuten bei einer Temperatur von 300 bis 500 °C durchgeführt wird.

28. Verfahren nach einem der Ansprüche 15 bis 27,
**dadurch gekennzeichnet,**
**dass** nach dem Verfestigen der auf die Elektrode aufgebrachten Suspension eine weitere Schicht aus Partikeln, die bei einer gewünschten Abschalttemperatur schmelzen, sogenannte Abschaltpartikel, zur Erzeugung eines Abschaltmechanismus auf die Separator-Elektroden-Einheit aufgebracht wird.

29. Verwendung einer Separator-Elektroden-Einheit gemäß einem der Ansprüche 1 bis 14 in Lithium-Batterien.

30. Lithium-Batterie, eine Separator-Elektroden-Einheit gemäß einem der Ansprüche 1 bis 14 aufweisend.

## Claims

1. A separator-electrode assembly comprising a porous electrode useful as an electrode in a lithium battery and a separator layer applied to this electrode,
wherein the separator-electrode assembly (SEA) has an inorganic separator layer comprising at least two fractions of metal oxide particles different from each other in their average particle size and/or in the metal, and an electrode,
**characterized in that** the active mass particles of the electrode are bonded together and to the current collector by an inorganic, electroconductive adhesive,
wherein the separator-electrode assembly contains no organic polymer binders whatsoever.

2. A separator-electrode assembly according to claim 1, **characterized in that** the separator layer comprises metal oxide particles having an average particle size (D_{g}) greater or smaller than the average pore size (d) of the pores of the porous electrode which are adhered together by metal oxide particles having a particle size (Dₖ) smaller than the pores of the porous positive or negative electrode, the separator layer forming a layer penetrating less than 20 D_{g} into the pores when metal oxide particles having an average particle size (D_{g}) smaller than the average pore size (d) of the pores of the porous electrode are present.

3. A separator-electrode assembly according to either of claims 1 and 2, **characterized in that** the separator layer has a thickness (z) which is in the range from less than 100 D_{g} to not less than 1.5 D_{g}.

4. A separator-electrode assembly according to one of claims 1 to 3, **characterized in that** the metal oxide particles having an average particle size (D_{g}) greater or smaller than the average pore size (d) of the pores of the porous positive electrode are Al₂O₃ and/or ZrO₂ particles.

5. A separator-electrode assembly according to one of claims 1 to 4, **characterized in that** the metal oxide particles having an average particle size (Dₖ) smaller than the average pore size (d) of the pores of the porous positive or negative electrode are SiO₂ and/or ZrO₂ particles.

6. A separator-electrode assembly according to one of claims 1 to 5, **characterized in that** the metal oxide particles having an average particle size (D_{g}) greater or smaller than the average pore size (d) of the pores of the porous positive or negative electrode have an average particle size (D_{g}) of less than 10 µm.

7. A separator-electrode assembly according to one of claims 1 to 6, **characterized in that** the separator layer comprises a further coating with particles, so-called shutdown particles, which melt at a desired shutdown temperature.

8. A separator-electrode assembly according to one of claims 1 to 7, **characterized in that** the separator layer has a porosity in the range from 30 to 70%.

9. A separator-electrode assembly according to one of claims 1 to 8, **characterized in that** the active mass particles have an average particle size in the range from 0.1 to 25 µm.

10. A separator-electrode assembly according to one of claims 1 to 9, **characterized in that** the positive electrodes have active masses comprising at least one of the elements Co, Ni, Mn, V, Fe or P and negative electrodes have active masses comprising as at least one of the elements C, Si, Nb, Ti, Mo or W.

11. A separator-electrode assembly according to claim 10, **characterized in that** the positive electrodes have active masses selected from LiNi_{1-y}Co_{y}O₂ (where y = 0 to 1), LiMn₂O₄, LiMnO₂, LiFePO₄, LiVOPO₄ and/or LiNiVO₄, and negative electrodes have active masses selected from graphite, silicon, graphite-silicon mixtures, lithium-silicon or lithium-tin containing alloys.

12. A separator-electrode assembly according to one of claims 1 to 11, **characterized in that** the electroconducting inorganic adhesive has an average particle size in the range from 1 to 100 nm.

13. A separator-electrode assembly according to one of claims 1 to 12, **characterized in that** the particles of the inorganic adhesive are selected from particles of active mass for electrodes, the active mass for positive electrodes comprising at least one of the elements Co, Ni, Mn, V, Fe or P and for negative electrodes comprising at least one of the elements C, Si, Nb, Ti, Mo or W, or from particles of compounds selected from titanium suboxide, titanium nitride, titanium carbide, doped or undoped tin oxide, indium-tin oxide (ITO) and doped or undoped zinc oxide.

14. A separator-electrode assembly according to one of claims 1 to 13, **characterized in that** the assembly is bendable down to a radius down to 1 cm without damage.

15. A process for producing a separator-electrode assembly according to one of claims 1 to 14, **characterized in that** a porous electrode useful as a positive (cathode) or negative (anode) electrode in a lithium battery is formed by applying a suspension comprising active mass particles suspended in a sol or a dispersion of nanoscale active mass particles in a solvent and solidifying the suspension to an all-inorganic porous electrode layer on a current collector by at least one thermal treatment, and **in that** on the thus produced electrode as a substrate a porous inorganic coating as a separator layer is formed by applying a suspension comprising metal oxide particles in a sol and solidifying the inorganic separator layer on the electrode by at least one thermal treatment.

16. A process according to claim 15, **characterized in that** a suspension used for producing the porous electrode layer of the positive electrode comprises active mass particles selected from particles comprising at least one of the elements Co, Ni, Mn, V, Fe or P, or a suspension used for producing the porous electrode layer of the negative electrode comprises active mass particles selected from particles comprising at least one of the elements C, Si, Nb, Ti, Mo or W.

17. A process according to claim 15 or 16, **characterized in that** active mass particles having an average particle size in the range from 0.1 to 20 µm are used.

18. A process according to one of claims 15 to 17, **characterized in that** for producing the suspension for producing a positive electrode layer a sol comprising at least one of the elements Co, Ni, Mn, V, Fe, P or a compound selected from titanium suboxide, titanium nitride, titanium carbide, doped or undoped tin oxide, indium-tin oxide (ITO) and doped or undoped zinc oxide, and for producing a negative electrode layer a sol comprising at least one of the elements Nb, Ti, Mo, W or a compound selected from titanium suboxide, titanium nitride, titanium carbide, doped or undoped tin oxide, indium tin-oxide (ITO) and doped or undoped zinc oxide, or for producing the suspension for producing a positive electrode layer a dispersion of nanoscale particles having an average primary particle size of less than 50 nm comprising at least one of the elements Co, Ni, Mn, V, Fe or P or a compound selected from titanium suboxide, titanium nitride, titanium carbide, doped or undoped tin oxide, indium-tin oxide (ITO) and doped or undoped zinc oxide, and for producing a negative electrode layer a dispersion of nanoscale particles having an average primary particle size of less than 50 nm comprising at least one of the elements C, Si, Nb, Ti, Mo or W or a compound selected from titanium suboxide, titanium nitride, titanium carbide, doped or undoped tin oxide, indium-tin oxide (ITO) and doped or undoped zinc oxide is used, and the suspension is applied to the current collector by printing on, pressing on, pressing in, rolling on, knifecoating on, brushing on, dipping, spraying or pouring on.

19. A process according to one of claims 15 to 18, **characterized in that** for producing the electrode layer a suspension is used wherein the weight ratio of active mass particle to sol or suspension comprising nanoscale active mass particles is in the range from 1:100 to 2:1.

20. A process according to one of claims 15 to 19, **characterized in that** the suspension applied to the current collector is solidified by heating to a temperature in the range from 50 to 700°C.

21. A process according to claim 20, **characterized in that** the heating is effected at a temperature of 300 to 500°C for 0.1 to 10 minutes.

22. A process according to any one of claims 15 to 21, **characterized in that** for producing the separator layer a suspension is used comprising metal oxide particles having an average particle size (D_{g}) greater or smaller than the average pore size (d) of the pores of the porous electrode, wherein in the case of the presence of particles having an average particle size Dg smaller than the average pore size d of the porous electrode additional agents are present in the suspension to raise the viscosity of the suspension , and the suspension for producing the separator layer is applied to the substrate by printing on, pressing on, pressing in, rolling on, knifecoating on, brushing on, dipping, spraying or pouring on.

23. A process according to any one of claims 15 to 22, **characterized in that** Al₂O₃ and/or ZrO₂ particles are used as metal oxide particles or as metal oxide particles having an average particle size (D_{g}) greater or smaller than the average pore size (d) of the pores of the porous positive electrode for producing the suspension.

24. A process according to one of claims 15 to 23, **characterized in that** the suspension used for producing the separator layer comprises at least one sol of the elements Al, Zr or Si or a mixture of these sols and is produced by suspending the metal oxide particles in at least one of these sols.

25. A process according to any one of claims 15 to 24, **characterized in that** the sols are obtained by hydrolyzing at least one alkoxide compound of the respective elements with water or an acid or a combination thereof.

26. A process according to one of claims 15 to 25, **characterized in that** the suspension applied to the electrode is solidified by heating to a temperature in the range from 50-700°C.

27. A process according to claim 26, **characterized in that** the heating is effected at a temperature of 300 to 500°C from 0.1 to 10 minutes.

28. A process according to one of claims 15 to 27, **characterized in that** the solidifying of the suspension applied to the electrode is followed by the application to the separator-electrode assembly of a further layer of particles, so-called shutdown particles, which melt at a desired shutdown temperature to create a shutdown mechanism.

29. The use of a separator-electrode assembly according to one of claims 1 to 14 in lithium batteries.

30. A lithium battery comprising a separator-electrode assembly according to one of claims 1 to 14.

## Revendications

1. Unité séparateur-électrode, comprenant une électrode poreuse appropriée en tant qu'électrode dans une batterie au lithium et une couche de séparateur appliquée sur cette électrode,
l'unité séparateur-électrode (SEA) comprenant une couche de séparateur inorganique qui comprend au moins deux fractions de particules d'oxyde métallique, qui diffèrent l'une de l'autre au niveau de leur taille de particule moyenne et/ou du métal, et une électrode, **caractérisée en ce que**
ses particules de masse active sont reliées par une colle inorganique électriquement conductrice les unes avec les autres et avec l'électrode de dérivation,
l'unité séparateur-électrode ne contenant pas de liant polymère organique.

2. Unité séparateur-électrode selon la revendication 1, **caractérisée en ce que** la couche de séparateur comprend des particules d'oxyde métallique ayant une taille de particule moyenne (D_{g}) supérieure ou inférieure à la taille de pore moyenne (d) des pores de l'électrode poreuse, qui sont collées par des particules d'oxyde métallique qui présentent une taille de particule (Dₖ) inférieure aux pores de l'électrode poreuse positive ou négative, lors de la présence de particules d'oxyde métallique ayant une taille de particule moyenne (D_{g}) inférieure à la taille de pore moyenne (d) des pores de l'électrode poreuse, la couche de séparateur formant une couche qui pénètre moins de 20 D_{g} dans les pores.

3. Unité séparateur-électrode selon l'une quelconque des revendications 1 ou 2, **caractérisée en ce que** la couche de séparateur présente une épaisseur (z) allant de moins de 100 D_{g} à 1,5 D_{g} ou plus.

4. Unité séparateur-électrode selon l'une quelconque des revendications 1 à 3, **caractérisée en ce que** les particules d'oxyde métallique ayant une taille de particule moyenne (D_{g}) supérieure ou inférieure à la taille de pore moyenne (d) des pores de l'électrode poreuse positive sont des particules d'Al₂O₃ et/ou de ZrO₂.

5. Unité séparateur-électrode selon l'une quelconque des revendications 1 à 4, **caractérisée en ce que** les particules d'oxyde métallique ayant une taille de particule moyenne (Dₖ) inférieure à la taille de pore moyenne (d) des pores de l'électrode poreuse positive ou négative sont des particules de SiO₂ et/ou de ZrO₂.

6. Unité séparateur-électrode selon l'une quelconque des revendications 1 à 5, **caractérisée en ce que** les particules d'oxyde métallique ayant une taille de particule moyenne (D_{g}) supérieure ou inférieure à la taille de pore moyenne (d) des pores de l'électrode poreuse positive ou négative présentent une taille de particule moyenne (D_{g}) inférieure à 10 µm.

7. Unité séparateur-électrode selon l'une quelconque des revendications 1 à 6, **caractérisée en ce que** la couche de séparateur comprend un autre revêtement avec des particules qui fondent à une température d'arrêt souhaitée, dites particules d'arrêt.

8. Unité séparateur-électrode selon l'une quelconque des revendications 1 à 7, **caractérisée en ce que** la couche de séparateur présente une porosité de 30 à 70 %.

9. Unité séparateur-électrode selon l'une quelconque des revendications 1 à 8, **caractérisée en ce que** les particules de masse active présentent une taille de particule moyenne de 0,1 à 25 µm.

10. Unité séparateur-électrode selon l'une quelconque des revendications 1 à 9, **caractérisée en ce que** les électrodes positives comprennent des masses actives qui comprennent au moins un des éléments Co, Ni, Mn, V, Fe ou P, et les électrodes négatives comprennent des masses actives qui comprennent au moins un des éléments C, Si, Nb, Ti, Mo ou W.

11. Unité séparateur-électrode selon la revendication 10, **caractérisée en ce que** les électrodes positives comprennent des masses actives qui sont choisies parmi LiNi_{1-y}Co_{y}O₂ (avec y = 0 à 1), LiMn₂O₄, LiMnO₂, LiFePO₄, LiVOPO₄ et/ou LiNiVO₄, et les électrodes négatives comprennent des masses actives qui sont choisies parmi le graphite, le silicium, les mélanges de graphite et de silicium, les alliages contenant du lithium et du silicium ou du lithium et de l'étain.

12. Unité séparateur-électrode selon l'une quelconque des revendications 1 à 11, **caractérisée en ce que** la colle inorganique électriquement conductrice présente une taille de particule moyenne de 1 à 100 nm.

13. Unité séparateur-électrode selon l'une quelconque des revendications 1 à 12, **caractérisée en ce que** les particules de la colle inorganique sont choisies parmi les particules de masse active pour des électrodes, celle-ci comprenant pour des électrodes positives au moins un des éléments Co, Ni, Mn, V, Fe ou P et pour des électrodes négatives au moins un des éléments C, Si, Nb, Ti, Mo ou W, ou parmi les particules de composés choisis parmi le sous-oxyde de titane, le nitrure de titane, le carbure de titane, l'oxyde d'étain dopé ou non dopé, l'oxyde d'indium et d'étain (ITO), et l'oxyde de zinc dopé ou non dopé.

14. Unité séparateur-électrode selon l'une quelconque des revendications 1 à 13, **caractérisée en ce que** l'unité est flexible jusqu'à un rayon de 1 cm sans endommagement.

15. Procédé de fabrication d'une unité séparateur-électrode selon l'une quelconque des revendications 1 à 14, **caractérisé en ce qu'**une électrode poreuse appropriée en tant qu'électrode positive (cathode) ou négative (anode) dans une batterie au lithium est formée par application d'une suspension qui comprend des particules de masse active suspendues dans un sol ou d'une dispersion de particules de masse active nanométriques dans un solvant, et solidification de la suspension en une couche d'électrode poreuse purement inorganique sur une électrode de dérivation par au moins un traitement thermique, et **en ce qu'**un revêtement inorganique poreux est formé sur l'électrode ainsi fabriquée en tant que substrat en tant que couche de séparateur, par application d'une suspension qui comprend des particules d'oxyde métallique dans un sol, et solidification de la couche de séparateur inorganique sur l'électrode par au moins un traitement thermique.

16. Procédé selon la revendication 15, **caractérisé en ce qu'**une suspension pour la fabrication de la couche d'électrode poreuse de l'électrode positive est utilisée, qui comprend des particules de masse active choisies parmi les particules qui comprennent au moins un des éléments Co, Ni, Mn, V, Fe ou P, ou une suspension pour la fabrication de la couche d'électrode poreuse de l'électrode négative est utilisée, qui comprend des particules de masse active choisies parmi les particules qui comprennent au moins un des éléments C, Si, Nb, Ti, Mo ou W.

17. Procédé selon la revendication 15 ou 16, **caractérisé en ce que** des particules de masse active qui présentent une taille de particule moyenne de 0,1 à 20 µm sont utilisées.

18. Procédé selon l'une quelconque des revendications 15 à 17, **caractérisé en ce qu'**un sol qui comprend au moins un des éléments Co, Ni, Mn, V, Fe, P ou un composé choisi parmi le sous-oxyde de titane, le nitrure de titane, le carbure de titane, l'oxyde d'étain dopé ou non dopé, l'oxyde d'indium et d'étain (ITO) et l'oxyde de zinc dopé ou non dopé est utilisé pour la fabrication de la suspension pour la fabrication d'une couche d'électrode positive, et un sol qui comprend au moins un des éléments Nb, Ti, Mo, W ou un composé choisi parmi le sous-oxyde de titane, le nitrure de titane, le carbure de titane, l'oxyde d'étain dopé ou non dopé, l'oxyde d'indium et d'étain (ITO) et l'oxyde de zinc dopé ou non dopé est utilisé pour la fabrication d'une couche d'électrode négative, ou une dispersion de particules nanométriques ayant une taille de particule primaire moyenne inférieure à 50 nm, qui comprend au moins un des éléments Co, Ni, Mn, V, Fe, P ou un composé choisi parmi le sous-oxyde de titane, le nitrure de titane, le carbure de titane, l'oxyde d'étain dopé ou non dopé, l'oxyde d'indium et d'étain (ITO) et l'oxyde de zinc dopé ou non dopé est utilisée pour la fabrication de la suspension pour la fabrication d'une couche d'électrode positive, et une dispersion de particules nanométriques ayant une taille de particule primaire moyenne inférieure à 50 nm, qui comprend au moins un des éléments C, Si, Nb, Ti, Mo ou W ou un composé choisi parmi le sous-oxyde de titane, le nitrure de titane, le carbure de titane, l'oxyde d'étain dopé ou non dopé, l'oxyde d'indium et d'étain (ITO) et l'oxyde de zinc dopé ou non dopé est utilisée pour la fabrication d'une couche d'électrode négative, et la suspension est appliquée par impression, pressage, injection, déroulement, raclage, enduction, immersion, pulvérisation ou coulage sur l'électrode de dérivation.

19. Procédé selon l'une quelconque des revendications 15 à 18, **caractérisé en ce que** pour la fabrication de la couche d'électrode, une suspension est utilisée, dans laquelle le rapport en poids entre les particules de masse active et le sol ou la suspension qui comprend des particules de masse active nanométriques est de 1 sur 100 à 2 sur 1.

20. Procédé selon l'une quelconque des revendications 15 à 19, **caractérisé en ce que** la suspension appliquée sur l'électrode de dérivation est solidifiée par chauffage à des températures de 50 à 700 °C.

21. Procédé selon la revendication 20, **caractérisé en ce que** le chauffage a lieu pendant 0,1 à 10 minutes à une température de 300 à 500 °C.

22. Procédé selon l'une quelconque des revendications 15 à 21, **caractérisé en ce que** pour la fabrication de la couche de séparateur, une suspension est utilisée, qui comprend des particules d'oxyde métallique ayant une taille de particule moyenne (D_{g}) supérieure ou inférieure à la taille de pore moyenne (d) des pores de l'électrode poreuse, lors de la présence de particules ayant une taille de particule moyenne D_{g} inférieure à la taille de pore moyenne d de l'électrode poreuse, des agents qui augmentent la viscosité de la suspension étant en outre présents dans la suspension, et la suspension pour la fabrication de la couche de séparateur étant appliquée par impression, pressage, injection, déroulement, raclage, enduction, immersion, pulvérisation ou coulage sur le substrat.

23. Procédé selon l'une quelconque des revendications 15 à 22, **caractérisé en ce que** des particules d'Al₂O₃ et/ou de ZrO₂ sont utilisées en tant que particules d'oxyde métallique ou en tant que particule d'oxyde métallique ayant une taille de particule moyenne (D_{g}) supérieure ou inférieure à la taille de pore moyenne (d) des pores de l'électrode poreuse positive pour la fabrication de la suspension.

24. Procédé selon l'une quelconque des revendications 15 à 23, **caractérisé en ce qu'**une suspension qui comprend au moins un sol des éléments Al, Zr ou Si ou un mélange de ces sols est utilisée pour la fabrication de la couche de séparateur, et est fabriquée par suspension des particules d'oxyde métallique dans au moins un de ces sols.

25. Procédé selon l'une quelconque des revendications 15 à 24, **caractérisé en ce que** les sols sont obtenus par hydrolyse d'au moins un composé d'alcoolate des éléments en question avec de l'eau ou un acide ou une combinaison de ces composés.

26. Procédé selon l'une quelconque des revendications 15 à 25, **caractérisé en ce que** la suspension appliquée sur l'électrode est solidifiée par chauffage à une température de 50 à 700 °C.

27. Procédé selon la revendication 26, **caractérisé en ce que** le chauffage est réalisé pendant 0,1 à 10 minutes à une température de 300 à 500 °C.

28. Procédé selon l'une quelconque des revendications 15 à 27, **caractérisé en ce qu'**après la solidification de la suspension appliquée sur l'électrode, une autre couche de particules qui fondent à une température d'arrêt souhaitée, dites particules d'arrêt, est appliquée pour la formation d'un mécanisme d'arrêt sur l'unité séparateur-électrode.

29. Utilisation d'une unité séparateur-électrode selon l'une quelconque des revendications 1 à 14 dans des batteries au lithium.

30. Batterie au lithium, comprenant une unité séparateur-électrode selon l'une quelconque des revendications 1 à 14.
